(19) **Europäisches Patentamt**
**European Patent Office**
**Office européen des brevets**

(11) **EP 3 346 630 A1**

(12) **EUROPEAN PATENT APPLICATION**
published in accordance with Art. 153(4) EPC

(43) Date of publication:
**11.07.2018 Bulletin 2018/28**

(51) Int Cl.:
**H04L 5/00** (2006.01) **H04L 1/06** (2006.01)
**H04L 1/00** (2006.01) **H04W 24/10** (2009.01)

(21) Application number: **16842365.5**

(22) Date of filing: **02.09.2016**

(86) International application number:
**PCT/KR2016/009872**

(87) International publication number:
**WO 2017/039399 (09.03.2017 Gazette 2017/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.09.2015 US 201562214198 P**
**24.09.2015 US 201562232402 P**
**04.11.2015 US 201562251086 P**

(71) Applicant: **LG Electronics Inc.**
**Yeongdeungpo-gu**
**Seoul 07336 (KR)**

(72) Inventors:
• **PARK, Haewook**
**Seoul 06772 (KR)**
• **KIM, Kijun**
**Seoul 06772 (KR)**
• **PARK, Jonghyun**
**Seoul 06772 (KR)**

(74) Representative: **Katérle, Axel**
**Wuesthoff & Wuesthoff**
**Patentanwälte PartG mbB**
**Schweigerstraße 2**
**81541 München (DE)**

(54) **METHOD FOR REPORTING CHANNEL STATE INFORMATION IN WIRELESS COMMUNICATION SYSTEM AND DEVICE THEREFOR**

(57) A method performed by a user equipment for reporting Channel State Information (CSI) in a wireless communication system according to the present invention comprises receiving RRC (Radio Resource Control) signaling which includes control information related to configuration of a 12-port CSI-RS (Reference Signal) from an eNB; receiving the 12-port CSI-RS through a 12-port CSI-RS resource from the eNB on the basis of the received control information; and reporting CSI (Channel State Information) to the eNB on the basis of the received CSI-RS. According to the present invention, full power transmission of each port is made possible for transmission of a 12-port CSI-RS.

【Figure 49】

Start

Receive control information related to 12-port CSI-RS configuration — S4910

Receive 12-port CSI-RS on the basis of received control information — S4920

CSI report on the basis of received 12-port CSI-RS — S4930

End

EP 3 346 630 A1

**Description**

[Technical Field]

The present invention relates to a wireless communication system and more particularly, a method for a user equipment to report Channel State Information (CSI) by using a reference signal and an apparatus supporting the method.

[Background Art]

Mobile communication systems have been developed to provide voice services while ensuring the activity of a user. However, the mobile communication systems have been expanded to their regions up to data services as well as voice. Today, the shortage of resources is caused due to an explosive increase of traffic, and more advanced mobile communication systems are required due to user's need for higher speed services.

Requirements for a next-generation mobile communication system basically include the acceptance of explosive data traffic, a significant increase of a transfer rate per user, the acceptance of the number of significantly increased connection devices, very low end-to-end latency, and high energy efficiency. To this end, research is carried out on various technologies, such as dual connectivity, massive Multiple Input Multiple Output (MIMO), in-band full duplex, Non-Orthogonal Multiple Access (NOMA), the support of a super wideband, and device networking.

In the case of the current LTE(-A) system, the CSI-RS pattern (or CSI-RS resource) supports 1, 2, 4, or 8 antenna ports only, each of which is a power of 2.

However, in case the number of transmitting antennas (or antennas of a transmitting apparatus) is large as in a massive MIMO system, the CSI-RS pattern can assume a various form, and antenna configuration for the CSI-RS pattern may vary even for the same number of antennas.

As described above, considering a transmitting antenna structure which varies in sizes and patterns, it may be ineffective to limit the number of CSI-RS ports only to a power of 2.

[Disclosure]

[Technical Problem]

Therefore, an object of the present invention is to provide a method for configuring a new CSI-RS pattern or CSI-RS resource in a massive MIMO system, which uses more than eight antenna ports.

Also, an object of the present invention is to provide a rule for numbering antenna ports of each CSI-RS resource among a plurality of CSI-RS resources.

Also, an object of the present invention is to provide a method for transmitting information related to CSI-RS resource newly defined through upper layer signaling.

The technical objects to achieve in this document are not limited to those technical objects described above, but other technical objects not mentioned above may be clearly understood by those skilled in the art to which the present invention belongs from the specifications give below.

[Technical Solution]

A method performed by a user equipment for reporting Channel State Information (CSI) in a wireless communication system according to the present invention comprises receiving RRC (Radio Resource Control) signaling which includes control information related to configuration of a 12-port CSI-RS (Reference Signal) from an eNB; receiving the 12-port CSI-RS through a 12-port CSI-RS resource from the eNB on the basis of the received control information; and reporting CSI (Channel State Information) to the eNB on the basis of the received CSI-RS, wherein the 12-port CSI-RS resource is an aggregation of three 4-port CSI-RS resources; the 4-port CSI-RS resource comprises 4 REs (Resource Elements); and the ports of the 4-port CSI-RS are multiplexed by CDM (Code Division Multiplexing) of length 4 and are mapped to the 4 REs.

Also, the 4 REs of the present invention include two consecutive symbols in the time domain and two subcarriers in the frequency domain.

Also, the two subcarriers of the present invention are separated from each other by 6 subcarrier intervals.

Also, the ports of the 12 port CSI-RS of the present invention comprise three 4-port CSI-RS port groups, and the CDM of length 4 is applied to each 4-port CSI-RS port group.

Also, the RRC signaling of the present invention further comprises CDM length information indicating CDM length.

Also, the CDM length of the present invention is CDM 2, CDM 4, or CDM 8.

Also, the control information of the present invention further comprises position information indicating a start position of each 4-port CSI-RS resource being aggregated.

Also, the control information of the present invention further comprises information indicating the number of ports of each CSI-RS resource being aggregated.

Also, a user equipment for reporting CSI (Channel State Information) in a wireless communication system according to the present invention comprises an RF (Radio Frequency) unit transmitting and receiving a radio signal; and a processor controlling the RF unit, wherein the processor is configured to receive RRC (Radio Resource Control) signaling which includes control information related to configuration of a 12-port CSI-RS (Reference Signal) from an eNB; to receive the 12-port CSI-RS through a 12-port CSI-RS resource from the eNB on the basis of the received control information; and to report CSI (Channel State Information) to the eNB on the basis of the received CSI-RS, wherein the 12-port CSI-RS resource is an aggregation of three 4-port CSI-RS resources; and the ports of the 4-port CSI-RS are multiplexed by CDM (Code Division Multiplexing) of length 4 and are mapped to the 4 REs.

[Advantageous Effects]

The present invention configures a new CSI-RS resource by aggregating legacy CSI-RS resources, thereby not only efficiently supporting a system having a large number of transmitting antennas, such as a massive MIMO system but also maintaining compatibility with legacy systems.

Also, according to the present invention, when the CSI-RS is configured by using more than 8-ports, CDM of length 4 is applied to each legacy CSI-RS port so that each legacy CSI-RS port may use the full power.

The advantageous effects that may be obtained from the present invention are not limited to the effects described above, but other advantageous effects not mentioned above may be clearly understood by those skilled in the art to which the present invention belongs.

[Brief Description of the Drawings]

The accompanying drawings, which are included as part of a detailed description to provide further understanding of the invention, illustrate embodiments of the invention and together with the description serve to explain the principles of the invention.

FIG. 1 illustrates a structure of a radio frame in a wireless communication system to which the present invention may be applied.

FIG. 2 illustrates resource grids for one downlink slot in a wireless communication system to which the present invention may be applied.

FIG. 3 illustrates a structure of a downlink subframe in a wireless communication system to which the present invention may be applied.

FIG. 4 illustrates a structure of a uplink subframe in a wireless communication system to which the present invention may be applied.

FIG. 5 illustrates a structure of a general Multi-Input Multi-Output (MIMO) communication system.

FIG. 6 illustrates a channel from a plurality of transmitting antennas to one receiving antenna.

FIG. 7 illustrates a reference signal pattern mapped to a downlink resource block pair in a wireless communication system to which the present invention may be applied.

FIG. 8 illustrates a CSI-RS configuration in a wireless communication system to which the present invention may be applied.

FIG. 9 illustrates one example of a 2D active antenna system having 64 antenna elements to which the present invention may be applied.

FIG. 10 illustrates a system in which an eNB or a user equipment is equipped with a plurality of transmitting/receiving antennas capable of AAS-based 3D beam forming in a wireless communication system to which the present invention may be applied.

FIG. 11 illustrates one example of a polarization-based 2D plane antenna array model.

FIG. 12 illustrates one example of a transceiver unit (TXRU) model.

FIG. 13 illustrates one example of an 8-port CSI-RS resource mapping pattern to which a method according to the present invention may be applied.

FIG. 14 illustrates one example of CSI-RS configuration in a normal CP to which a method according to the present invention may be applied.

FIG. 15 illustrates one example of CSI-RS configuration in an extended CP to which a method according to the present invention may be applied.

FIG. 16 illustrates one example of power boosting with respect to a reference signal multiplexed according to FDM scheme.

FIG. 17 illustrates one example of a 16-port CSI-RS pattern in a normal CP according to the present invention.

FIGs. 18 and 19 illustrate another example of a 16-port CSI-RS pattern in a normal CP according to the present invention.

FIG. 20 illustrates one example of a 12-port CSI-RS pattern in a normal CP according to the present invention.

FIG. 21 illustrates one example of a 16-port CSI-RS configuration in an extended CP according to the present invention.

FIG. 22 illustrates one example of a 12-port CSI-RS configuration in an extended CP according to the present invention.

FIG. 23 illustrates another example of a 16-port CSI-RS pattern in a normal CP according to the present invention.

FIG. 24 illustrates a yet another example of a 16-port CSI-RS pattern in a normal CP according to the present invention.

FIG. 25 illustrates a still another example of a 16-port CSI-RS pattern in a normal CP according to the present invention.

FIG. 26 illustrates a further example of a 16-port CSI-RS pattern in a normal CP according to the present invention.

FIGs. 27 and 28 illustrate another example of a 12-port CSI-RS pattern in a normal CP according to the present invention.

FIGs. 29 and 30 illustrate another example of a 16-port CSI-RS pattern in an extended CP according to the present invention.

FIGs. 31 and 32 illustrate a yet another example of a 16-port CSI-RS pattern in an extended CP according to the present invention.

FIG. 33 illustrates one example of a 12-port CSI-RS pattern in a normal CP according to the present invention.

FIGs. 34 to 36 illustrate one example of a 16-port CSI-RS pattern in a normal CP according to the present invention.

FIG. 37 illustrates another example of a 12-port CSI-RS pattern configuration in a normal CP according to the present invention.

FIG. 38 illustrates a yet another example of a 12-port CSI-RS pattern configuration in a normal CP according to the present invention.

FIGs. 39 to 41 illustrate a still another example of a 12-port CSI-RS pattern configuration in a normal CP according to the present invention.

FIG. 42 illustrates a further example of a 12-port CSI-RS pattern configuration in a normal CP according to the present invention.

FIGs. 43 and 44 illustrate examples of 12-port and 16-port CSI-RS pattern configurations in a normal CP according to the present invention.

FIGs. 45 to 48 illustrate examples of a resource pool in 4-port CSI-RS units for CDM of length 4 according to the present invention.

FIG. 49 is a flow diagram illustrating one example of a 12-port CSI-RS configuration method using CDM of length 4 according to the present invention.

FIG. 50 illustrates a block diagram of a wireless communication device according to one embodiment of the present invention.

[Mode for Invention]

Hereafter, preferred embodiments of the present invention will be described in detail with reference to the accompanying drawings. A detailed description to be disclosed hereinbelow together with the accompanying drawing is to describe embodiments of the present invention and not to describe a unique embodiment for carrying out the present invention. The detailed description below includes details in order to provide a complete understanding. However, those skilled in the art know that the present invention can be carried out without the details.

In some cases, in order to prevent a concept of the present invention from being ambiguous, known structures and devices may be omitted or may be illustrated in a block diagram format based on core function of each structure and device.

In the specification, a base station means a terminal node of a network directly performing communication with a terminal. In the present document, specific operations described to be performed by the base station may be performed by an upper node of the base station in some cases. That is, it is apparent that in the network constituted by multiple network nodes including the base station, various operations performed for communication with the terminal may be performed by the base station or other network nodes other than the base station. A base station (BS) may be generally substituted with terms such as a fixed station, Node B, evolved-NodeB (eNB), a base transceiver system (BTS), an access point (AP), and the like. Further, a 'terminal' may be fixed or movable and be substituted with terms such as user equipment (UE), a mobile station (MS), a user terminal (UT), a mobile subscriber station (MSS), a subscriber station (SS), an dvanced mobile station (AMS), a wireless terminal (WT), a Machine-Type Communication (MTC) device, a Machine-to-Machine (M2M) device, a Device-to-Device (D2D) device, and the like.

Hereinafter, a downlink means communication from the base station to the terminal and an uplink means communication from the terminal to the base station. In the downlink, a transmitter may be a part of the base station and a receiver may be a part of the terminal. In the uplink, the transmitter may be a part of the terminal and the receiver may be a part of the base station.

Specific terms used in the following description are provided to help appreciating the present invention and the use of the specific terms may be modified into other forms within the scope without departing from the technical spirit of the present invention.

The following technology may be used in various wireless access systems, such as code division multiple access (CDMA), frequency division multiple access (FDMA), time division multiple access (TDMA), , orthogonal frequency division multiple access (OFDMA), single carrier-FDMA (SC- FDMA), non-orthogonal multiple access (NOMA), and the like. The CDMA may be implemented by radio technology universal terrestrial radio access (UTRA) or CDMA2000. The TDMA may be implemented by radio technology such as Global System for Mobile communications (GSM)/General Packet Radio Service(GPRS)/Enhanced Data Rates for GSM Evolution (EDGE). The OFDMA may be implemented as radio technology such as IEEE 802.11(Wi-Fi), IEEE 802.16(WiMAX), IEEE 802-20, E-UTRA(Evolved UTRA), and the like. The UTRA is a part of a universal mobile telecommunication system (UMTS). 3rd generation partnership project (3GPP) long term evolution (LTE) as a part of an evolved UMTS (E-UMTS) using evolved-UMTS terrestrial radio access (E-UTRA) adopts the OFDMA in a downlink and the SC-FDMA in an uplink. LTE-advanced (A) is an evolution of the 3GPP LTE.

The embodiments of the present invention may be based on standard documents disclosed in at least one of IEEE 802, 3GPP, and 3GPP2 which are the wireless access systems. That is, steps or parts which are not described to definitely show the technical spirit of the present invention among the embodiments of the present invention may be based on the documents. Further, all terms disclosed in the document may be described by the standard document.

3GPP LTE/LTE-A is primarily described for clear description, but technical features of the present invention are not limited thereto.

### General system

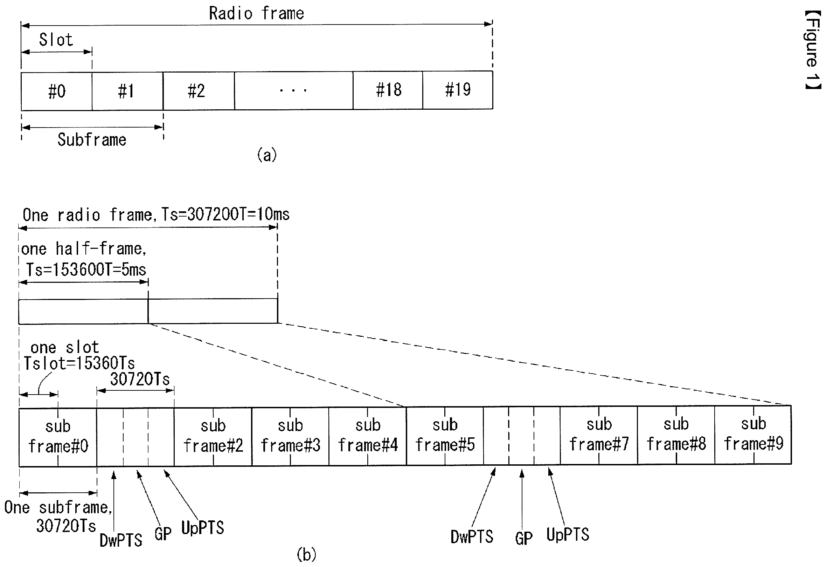

FIG. 1 illustrates a structure a radio frame in a wireless communication system to which the present invention can be applied.

In 3GPP LTE/LTE-A, radio frame structure type 1 may be applied to frequency division duplex (FDD) and radio frame structure type 2 may be applied to time division duplex (TDD) are supported.

FIG. 1(a) exemplifies radio frame structure type 1. The radio frame is constituted by 10 subframes. One subframe is constituted by 2 slots in a time domain. A time required to transmit one subframe is referred to as a transmissions time interval (TTI). For example, the length of one subframe may be 1 ms and the length of one slot may be 0.5 ms.

One slot includes a plurality of orthogonal frequency division multiplexing (OFDM) symbols in the time domain and includes multiple resource blocks (RBs) in a frequency domain. In 3GPP LTE, since OFDMA is used in downlink, the OFDM symbol is used to express one symbol period. The OFDM symbol may be one SC-FDMA symbol or symbol period. The resource block is a resource allocation wise and includes a plurality of consecutive subcarriers in one slot.

FIG. 1(b) illustrates frame structure type 2. Radio frame type 2 is constituted by 2 half frames, each half frame is constituted by 5 subframes, a downlink pilot time slot (DwPTS), a guard period (GP), and an uplink pilot time slot (UpPTS), and one subframe among them is constituted by 2 slots. The DwPTS is used for initial cell discovery, synchronization, or channel estimation in a terminal. The UpPTS is used for channel estimation in a base station and to match uplink transmission synchronization of the terminal. The guard period is a period for removing interference which occurs in uplink due to multi-path delay of a downlink signal between the uplink and the downlink.

In frame structure type 2 of a TDD system, an uplink-downlink configuration is a rule indicating whether the uplink and the downlink are allocated (alternatively, reserved) with respect to all subframes. Table 1 shows he uplink-downlink configuration.

[Table 1]

| Uplink-Downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |

(continued)

| Uplink-Downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 5ms | D | S | U | U | U | D | S | U | U | D |

With reference to Table 1, for each subframe of a radio frame, 'D' represents a subframe for downlink transmission, 'U' a subframe for uplink transmission, and 'S' a special subframe comprising three fields: a DwPTS (Downlink Pilot Time Slot), Guard Period (GP), and UpPTS (Uplink Pilot Time Slot).

DwPTS is used for a UE to perform an initial cell search, synchronization or channel estimation. UpPTS is used for the eNB's channel estimation and the UE's uplink transmission synchronization. GP is an interval aimed for removing interference caused in a uplink due to a multi-path delay of a downlink signal between the uplink and downlink.

Each subframe i comprises a slot 2i and a slot 2i+1, each of which has a length of 0.5 ms (T_slot = 15360*T_s = 0.5 ms).

The uplink-downlink configuration may be classified into 7 types, and for each configuration, positions and/or the numbers of downlink, special, and uplink subframes are different.

The time point at which a transmission direction is changed from downlink to uplink or the other way around is called a switching point. The switch-point periodicity of the switching point refers to a period at which switching between a uplink subframe and a downlink subframe is repeated in the same manner, and both 5 ms and 10 ms are supported. In case the downlink-uplink switch-point period is 5 ms, the special frame S exists for each half-frame while, in case the downlink-uplink switch-point period is 5 ms, the special frame exists only in the first hald-frame.

For each configuration, the 0-th, fifth subframe, and DwPTS are intended only for downlink transmission. UpPTS and the subframe immediately following the subframe are always used for uplink transmission.

The uplink-downlink configuration is system information, and both the eNB and the UE may be informed of the configuration. Each time the uplink-downlink configuration information is changed, the eNB may inform the UE of the changed state of uplink-downlink allocation in a radio frame by transmitting only the index of the configuration information. Also, the configuration information is a kind of downlink control information and may be transmitted through a PDCCH (Physical Downlink Control Channel) like other scheduling information; similarly, the configuration information may be transmitted as broadcast information to all of the UEs within a cell through a broadcast channel.

Table 2 shows configuration of a special subframe (length of DwPTS/GP/UpPTS).

[Table 2]

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | $2192 \cdot T_s$ | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | | |
| 5 | $6592 \cdot T_s$ | $4384 \cdot T_s$ | $5120 \cdot T_s$ | $20480 \cdot T_s$ | $4384 \cdot T_s$ | $5120 \cdot T_s$ |
| 6 | $19760 \cdot T_s$ | | | $23040 \cdot T_s$ | | |
| 7 | $21952 \cdot T_s$ | | | - | - | - |
| 8 | $24144 \cdot T_s$ | | | - | - | - |

The structure of a radio frame according to FIG. 1 is only an example; therefore, the number of subcarriers included in the radio frame, the number of slots included in the subframe, and the number of OFDM symbols included in a slot may be changed in various ways.

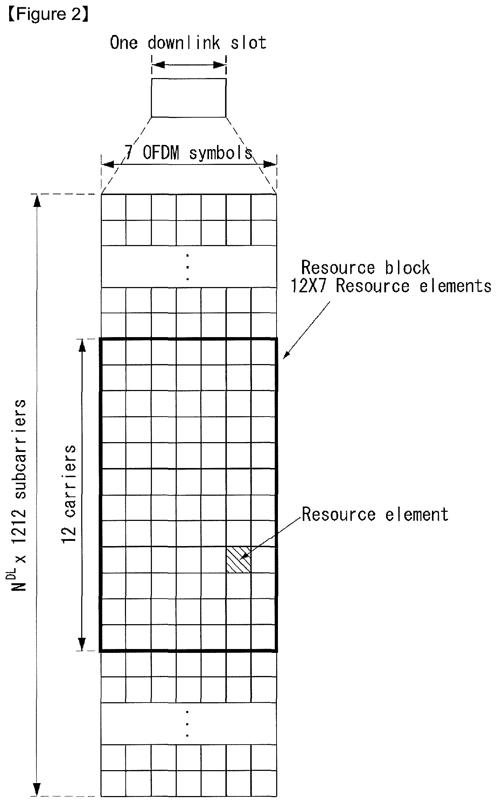

FIG. 2 is a diagram illustrating a resource grid for one downlink slot in the wireless communication system to which the present invention can be applied.

Referring to FIG. 2, one downlink slot includes the plurality of OFDM symbols in the time domain. Herein, it is exemplarily described that one downlink slot includes 7 OFDM symbols and one resource block includes 12 subcarriers in the frequency domain, but the present invention is not limited thereto.

Each element on the resource grid is referred to as a resource element and one resource block includes 12 x 7 resource elements. The number of resource blocks included in the downlink slot, NDL is subordinated to a downlink transmission bandwidth.

A structure of the uplink slot may be the same as that of the downlink slot.

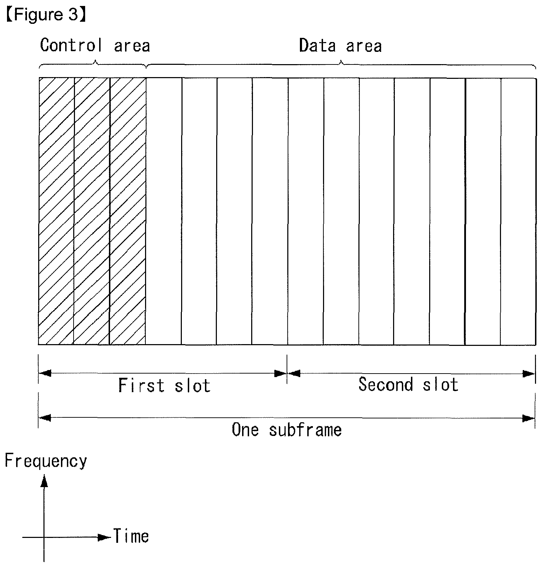

FIG. 3 illustrates a structure of a downlink subframe in the wireless communication system to which the present invention can be applied.

Referring to FIG. 3, a maximum of three fore OFDM symbols in the first slot of the sub frame is a control region to which control channels are allocated and residual OFDM symbols is a data region to which a physical downlink shared channel (PDSCH) is allocated. Examples of the downlink control channel used in the 3GPP LTE include a Physical Control Format Indicator Channel (PCFICH), a Physical Downlink Control Channel (PDCCH), a Physical Hybrid-ARQ Indicator Channel (PHICH), and the like.

The PFCICH is transmitted in the first OFDM symbol of the subframe and transports information on the number (that is, the size of the control region) of OFDM symbols used for transmitting the control channels in the subframe. The PHICH which is a response channel to the uplink transports an Acknowledgement (ACK)/Not-Acknowledgement (NACK) signal for a hybrid automatic repeat request (HARQ). Control information transmitted through a PDCCH is referred to as downlink control information (DCI). The downlink control information includes uplink resource allocation information, downlink resource allocation information, or an uplink transmission (Tx) power control command for a predetermined terminal group.

The PDCCH may transport A resource allocation and transmission format (also referred to as a downlink grant) of a downlink shared channel (DL-SCH), resource allocation information (also referred to as an uplink grant) of an uplink shared channel (UL-SCH), paging information in a paging channel (PCH), system information in the DL-SCH, resource allocation for an upper-layer control message such as a random access response transmitted in the PDSCH, an aggregate of transmission power control commands for individual terminals in the predetermined terminal group, a voice over IP (VoIP). A plurality of PDCCHs may be transmitted in the control region and the terminal may monitor the plurality of PDCCHs. The PDCCH is constituted by one or an aggregate of a plurality of continuous control channel elements (CCEs). The CCE is a logical allocation wise used to provide a coding rate depending on a state of a radio channel to the PDCCH. The CCEs correspond to a plurality of resource element groups. A format of the PDCCH and a bit number of usable PDCCH are determined according to an association between the number of CCEs and the coding rate provided by the CCEs.

The base station determines the PDCCH format according to the DCI to be transmitted and attaches the control information to a cyclic redundancy check (CRC) to the control information. The CRC is masked with a unique identifier (referred to as a radio network temporary identifier (RNTI)) according to an owner or a purpose of the PDCCH. In the case of a PDCCH for a specific terminal, the unique identifier of the terminal, for example, a cell-RNTI (C-RNTI) may be masked with the CRC. Alternatively, in the case of a PDCCH for the paging message, a paging indication identifier, for example, the CRC may be masked with a paging-RNTI (P-RNTI). In the case of a PDCCH for the system information, in more detail, a system information block (SIB), the CRC may be masked with a system information identifier, that is, a system information (SI)-RNTI. The CRC may be masked with a random access (RA)-RNTI in order to indicate the random access response which is a response to transmission of a random access preamble.

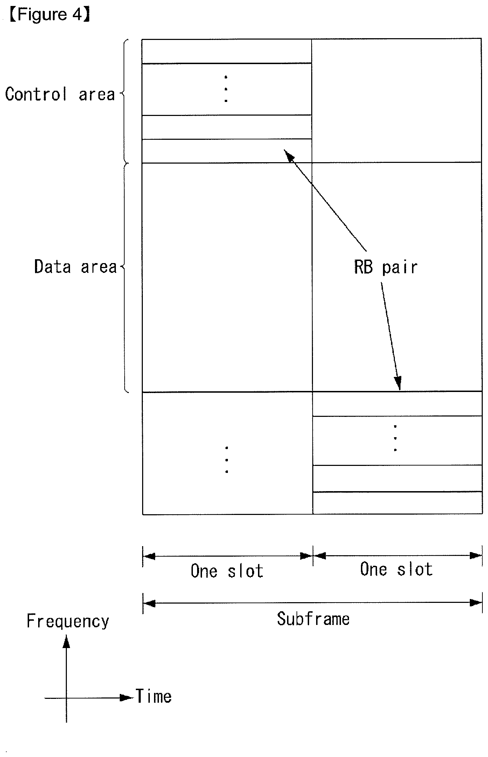

FIG. 4 illustrates a structure of an uplink subframe in the wireless communication system to which the present invention can be applied.

Referring to FIG. 4, the uplink subframe may be divided into the control region and the data region in a frequency domain. A physical uplink control channel (PUCCH) transporting uplink control information is allocated to the control region. A physical uplink shared channel (PUSCH) transporting user data is allocated to the data region. One terminal does not simultaneously transmit the PUCCH and the PUSCH in order to maintain a single carrier characteristic.

A resource block (RB) pair in the subframe are allocated to the PUCCH for one terminal. RBs included in the RB pair occupy different subcarriers in two slots, respectively. The RB pair allocated to the PUCCH frequency-hops in a slot boundary.

**Multi-Input Multi-Output (MIMO)**

An MIMO technology uses multiple transmitting (Tx) antennas and multiple receiving (Rx) antennas by breaking from generally one transmitting antenna and one receiving antenna up to now. In other words, the MIMO technology is a technology for achieving capacity increment or capability enhancement by using a multiple input multiple output antenna at a transmitter side or a receiver side of the wireless communication system. Hereinafter, "MIMO" will be referred to as "multiple input multiple output antenna".

In more detail, the MIMO technology does not depend on one antenna path in order to receive one total message and completes total data by collecting a plurality of data pieces received through multiple antennas. Consequently, the MIMO technology may increase a data transfer rate within in a specific system range and further, increase the system range through a specific data transfer rate.

In next-generation mobile communication, since a still higher data transfer rate than the existing mobile communication is required, it is anticipated that an efficient multiple input multiple output technology is particularly required. In such a situation, an MIMO communication technology is a next-generation mobile communication technology which may be widely used in a mobile communication terminal and a relay and attracts a concern as a technology to overcome a limit of a transmission amount of another mobile communication according to a limit situation due to data communication extension, and the like.

Meanwhile, the multiple input multiple output (MIMO) technology among various transmission efficiency improvement technologies which have been researched in recent years as a method that may epochally improve a communication capacity and transmission and reception performance without additional frequency allocation or power increment has the largest attention in recent years.

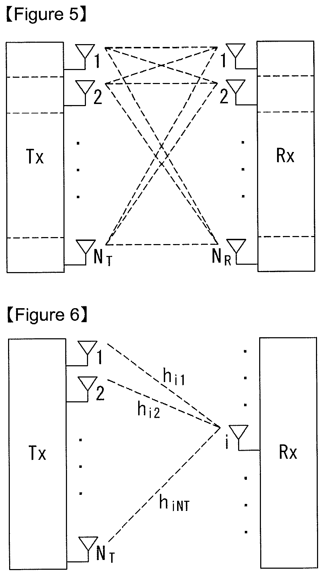

FIG. 5 is a configuration diagram of a general multiple input multiple output (MIMO) communication system.

Referring to FIG. 5, when the number of transmitting antennas increases to NT and the number of receiving antennas increases to NR at the same time, since a theoretical channel transmission capacity increases in proportion to the number of antennas unlike a case using multiple antennas only in a transmitter or a receiver, a transfer rate may be improved and frequency efficiency may be epchally improved. In this case, the transfer rate depending on an increase in channel transmission capacity may theoretically increase to a value acquired by multiplying a maximum transfer rate (Ro) in the case using one antenna by a rate increase rate (Ri) given below.

[Equation 1]

$$R_i = \min\left(N_T, N_R\right)$$

That is, for example, in an MIMO communication system using four transmitting antennas and four receiving antennas, a transfer rate which is four times higher than a single antenna system may be acquired.

Such an MIMO antenna technology may be divided into a spatial diversity scheme increasing transmission reliability by using symbols passing through various channel paths and a spatial multiplexing scheme improving the transfer rate by simultaneously transmitting multiple data symbols by using multiple transmitting antennas. Further, a research into a scheme that intends to appropriately acquire respective advantages by appropriately combining two schemes is also a field which has been researched in recent years.

The respective schemes will be described below in more detail.

First, the spatial diversity scheme includes a space-time block coding series and a space-time Trelis coding series scheme simultaneously using a diversity gain and a coding gain. In general, the Trelis is excellent in bit error rate enhancement performance and code generation degree of freedom, but the space-time block code is simple in operational complexity. In the case of such a spatial diversity gain, an amount corresponding to a multiple (NT x NR) of the number (NT) of transmitting antennas and the number (NR) of receiving antennas may be acquired.

Second, the spatial multiplexing technique is a method that transmits different data arrays in the respective transmitting antennas and in this case, mutual interference occurs among data simultaneously transmitted from the transmitter in the receiver. The receiver receives the data after removing the interference by using an appropriate signal processing technique. A noise removing scheme used herein includes a maximum likelihood detection (MLD) receiver, a zero-forcing (ZF) receiver, a minimum mean square error (MMSE) receiver, a diagonal-bell laboratories layered space-time (D-BLAST), a vertical-bell laboratories layered space-time), and the like and in particular, when channel information may be known in the transmitter side, a singular value decomposition (SVD) scheme, and the like may be used.

Third, a technique combining the space diversity and the spatial multiplexing may be provided. When only the spatial diversity gain is acquired, the performance enhancement gain depending on an increase in diversity degree is gradually saturated and when only the spatial multiplexing gain is acquired, the transmission reliability deteriorates in the radio channel. Schemes that acquire both two gains while solving the problem have been researched and the schemes include a space-time block code (Double-STTD), a space-time BICM (STBICM), and the like.

In order to describe a communication method in the MIMO antenna system described above by a more detailed method, when the communication method is mathematically modeled, the mathematical modeling may be shown as below.

First, it is assumed that NT transmitting antennas and NR receiving antennas are present as illustrated in FIG. 5.

First, in respect to a transmission signal, when NT transmitting antennas are provided, since the maximum number of transmittable information is NT, NT may be expressed as a vector given below.

[Equation 2]

$$\mathbf{s} = \left[ s_1, s_2, \cdots, s_{N_T} \right]^T$$

Meanwhile, transmission power may be different in the respective transmission information s1, s2, ..., sNT and in this case, when the respective transmission power is P1, P2, ..., PNT, the transmission information of which the transmission power is adjusted may be expressed as a vector given below.

[Equation 3]

$$\hat{\mathbf{s}} = \left[ \hat{s}_1, \hat{s}_2, \cdots, \hat{s}_{N_T} \right]^T = \left[ P_1 s_1, P_2 s_2, \cdots, P_{N_T} s_{N_T} \right]^T$$

Further, $\hat{\mathbf{s}}$ may be expressed as described below as a diagonal matrix P of the transmission power.

[Equation 4]

$$\hat{\mathbf{s}} = \begin{bmatrix} P_1 & & & 0 \\ & P_2 & & \\ & & \ddots & \\ 0 & & & P_{N_T} \end{bmatrix} \begin{bmatrix} s_1 \\ s_2 \\ \vdots \\ s_{N_T} \end{bmatrix} = \mathbf{Ps}$$

Meanwhile, the information vector $\hat{\mathbf{s}}$ of which the transmission power is adjusted is multiplied by a weight matrix W to constitute NT transmission signals x1, x2, ..., xNT which are actually transmitted. Herein, the weight matrix serves to appropriately distribute the transmission information to the respective antennas according to a transmission channel situation, and the like. The transmission signals x1, x2, ..., xNT may be expressed as below by using a vector x.

[Equation 5]

$$\mathbf{x} = \begin{bmatrix} x_1 \\ x_2 \\ \vdots \\ x_i \\ \vdots \\ x_{N_T} \end{bmatrix} = \begin{bmatrix} w_{11} & w_{12} & \cdots & w_{1N_T} \\ w_{21} & w_{22} & \cdots & w_{2N_T} \\ \vdots & & \ddots & \\ w_{i1} & w_{i2} & \cdots & w_{iN_T} \\ \vdots & & \ddots & \\ w_{N_T1} & w_{N_T2} & \cdots & w_{N_TN_T} \end{bmatrix} \begin{bmatrix} \hat{s}_1 \\ \hat{s}_2 \\ \vdots \\ \hat{s}_j \\ \vdots \\ \hat{s}_{N_T} \end{bmatrix} = \mathbf{W\hat{s}} = \mathbf{WPs}$$

Herein, wij represents a weight between the i-th transmitting antenna and j-th transmission information and W represents the weight as the matrix. The matrix W is called a weight matrix or a precoding matrix.

Meanwhile, the transmission signal x described above may be divided into transmission signals in a case using the spatial diversity and a case using the spatial multiplexing.

In the case using the spatial multiplexing, since different signals are multiplexed and sent, all elements of an information vector s have different values, while when the spatial diversity is used, since the same signal is sent through multiple channel paths, all of the elements of the information vector s have the same value.

Of course, a method mixing the spatial multiplexing and the spatial diversity may also be considered. That is, fro example, a case may also be considered, which transmits the same signal by using the spatial diversity through three transmitting antennas and different signals are sent by the spatial multiplexing through residual transmitting antennas.

Next, when NR receiving antennas are provided, received signals y1, y2, ..., yNR of the respective antennas are expressed as a vector y as described below.

## [Equation 6]

$$\mathbf{y} = \left[ y_1, y_2, \cdots, y_{N_R} \right]^{\mathrm{T}}$$

Meanwhile, in the case of modeling the channel in the MIMO antenna communication system, respective channels may be distinguished according to transmitting and receiving antenna indexes and a channel passing through a receiving antenna i from a transmitting antenna j will be represented as hij. Herein, it is noted that in the case of the order of the index of hij, the receiving antenna index is earlier and the transmitting antenna index is later.

The multiple channels are gathered into one to be expressed even as vector and matrix forms. An example of expression of the vector will be described below.

FIG. 6 is a diagram illustrating a channel from multiple transmitting antennas to one receiving antenna.

As illustrated in FIG. 6, a channel which reaches receiving antenna I from a total of NT transmitting antennas may be expressed as below.

## [Equation 7]

$$\mathbf{h}_i^T = \left[ h_{i1}, h_{i2}, \cdots, h_{iN_T} \right]$$

Further, all of channels passing through NR receiving antennas from NT transmitting antennas may be shown as below through matrix expression shown in Equation given above.

## [Equation 8]

$$\mathbf{H} = \begin{bmatrix} \mathbf{h}_1^{\mathbf{T}} \\ \mathbf{h}_2^{\mathbf{T}} \\ \vdots \\ \mathbf{h}_i^{\mathbf{T}} \\ \vdots \\ \mathbf{h}_{\mathbf{N_R}}^{\mathbf{T}} \end{bmatrix} = \begin{bmatrix} h_{11} & h_{12} & \cdots & h_{1N_T} \\ h_{21} & h_{22} & \cdots & h_{2N_T} \\ \vdots & & \ddots & \\ h_{i1} & h_{i2} & \cdots & h_{iN_T} \\ \vdots & & \ddots & \\ h_{N_R 1} & h_{N_R 2} & \cdots & h_{N_R N_T} \end{bmatrix}$$

Meanwhile, since additive white Gaussian noise (AWGN) is added after passing through a channel matrix H given above in an actual channel, white noises n1, n2, ..., nNR added to NR receiving antennas, respectively are expressed as below.

## [Equation 9]

$$\mathbf{n} = \left[ n_1, n_2, \cdots, n_{N_R} \right]^{\mathrm{T}}$$

Each of the transmission signal, the reception signal, the channel, and the white noise in the MIMO antenna communication system may be expressed through a relationship given below by modeling the transmission signal, the reception signal, the channel, and the white noise.

[Equation 10]

$$\mathbf{y} = \begin{bmatrix} y_1 \\ y_2 \\ \vdots \\ y_i \\ \vdots \\ y_{N_R} \end{bmatrix} = \begin{bmatrix} h_{11} & h_{12} & \cdots & h_{1N_T} \\ h_{21} & h_{22} & \cdots & h_{2N_T} \\ \vdots & & \ddots & \\ h_{i1} & h_{i2} & \cdots & h_{iN_T} \\ \vdots & & \ddots & \\ h_{N_R 1} & h_{N_R 2} & \cdots & h_{N_R N_T} \end{bmatrix} \begin{bmatrix} x_1 \\ x_2 \\ \vdots \\ x_j \\ \vdots \\ x_{N_T} \end{bmatrix} + \begin{bmatrix} n_1 \\ n_2 \\ \vdots \\ n_i \\ \vdots \\ n_{N_R} \end{bmatrix} = \mathbf{Hx} + \mathbf{n}$$

The numbers of rows and columns of the channel matrix H representing the state of the channel are determined by the numbers of transmitting and receiving antennas. In the case of the channel matrix H, the number of rows becomes equivalent to NR which is the number of receiving antennas and the number of columns becomes equivalent to NR which is the number of transmitting antennas. That is, the channel matrix H becomes an NR x NR matrix.

In general, a rank of the matrix is defined as the minimum number among the numbers of independent rows or columns. Therefore, the rank of the matrix may not be larger than the number of rows or columns. As an equation type example, the rank (rank(H)) of the channel matrix H is limited as below.

[Equation 11]

$$rank(\mathbf{H}) \leq \min(N_T, N_R)$$

Further, when the matrix is subjected to Eigen value decomposition, the rank may be defined as not 0 but the number of Eigen values among the Eigen values. By a similar method, when the rank is subjected to singular value decomposition, the rank may be defined as not 0 but the number of singular values. Accordingly, a physical meaning of the rank in the channel matrix may be the maximum number which may send different information in a given channel.

In the present specification, a 'rank' for MIMO transmission represents the number of paths to independently transmit the signal at a specific time and in a specific frequency resource and 'the number of layers' represents the number of signal streams transmitted through each path. In general, since the transmitter side transmits layers of the number corresponding to the number of ranks used for transmitting the signal, the rank has the same meaning as the number layers if not particularly mentioned.

**Reference signal (RS)**

In the wireless communication system, since the data is transmitted through the radio channel, the signal may be distorted during transmission. In order for the receiver side to accurately receive the distorted signal, the distortion of the received signal needs to be corrected by using channel information. In order to detect the channel information, a signal transmitting method know by both the transmitter side and the receiver side and a method for detecting the channel information by using an distortion degree when the signal is transmitted through the channel are primarily used. The aforementioned signal is referred to as a pilot signal or a reference signal (RS).

Recently, when packets are transmitted in most of mobile communication systems, multiple transmitting antennas and multiple receiving antennas are adopted to increase transceiving efficiency rather than a single transmitting antenna and a single receiving antenna. When the data is transmitted and received by using the MIMO antenna, a channel state between the transmitting antenna and the receiving antenna need to be detected in order to accurately receive the signal. Therefore, the respective transmitting antennas need to have individual reference signals.

Reference signal in a wireless communication system can be mainly categorized into two types. In particular, there are a reference signal for the purpose of channel information acquisition and a reference signal used for data demodulation. Since the object of the former reference signal is to enable a UE (user equipment) to acquire a channel information in DL (downlink), the former reference signal should be transmitted on broadband. And, even if the UE does not receive DL data in a specific subframe, it should perform a channel measurement by receiving the corresponding reference signal. Moreover, the corresponding reference signal can be used for a measurement for mobility management of a handover or the like. The latter reference signal is the reference signal transmitted together when a base station transmits DL data. If a UE receives the corresponding reference signal, the UE can perform channel estimation, thereby demodulating data. And, the corresponding reference signal should be transmitted in a data transmitted region.

The DL reference signals are categorized into a common reference signal (CRS) shared by all terminals for an acquisition of information on a channel state and a measurement associated with a handover or the like and a dedicated reference signal (DRS) used for a data demodulation for a specific terminal. Information for demodulation and channel measurement may be provided by using the reference signals. That is, the DRS is used only for data demodulation only, while the CRS is used for two kinds of purposes including channel information acquisition and data demodulation.

The receiver side (that is, terminal) measures the channel state from the CRS and feeds back the indicators associated with the channel quality, such as the channel quality indicator (CQI), the precoding matrix index (PMI), and/or the rank indicator (RI) to the transmitting side (that is, base station). The CRS is also referred to as a cell-specific RS. On the contrary, a reference signal associated with a feed-back of channel state information (CSI) may be defined as CSI-RS.

The DRS may be transmitted through resource elements when data demodulation on the PDSCH is required. The terminal may receive whether the DRS is present through the upper layer and is valid only when the corresponding PDSCH is mapped. The DRS may be referred to as the UE-specific RS or the demodulation RS (DMRS).

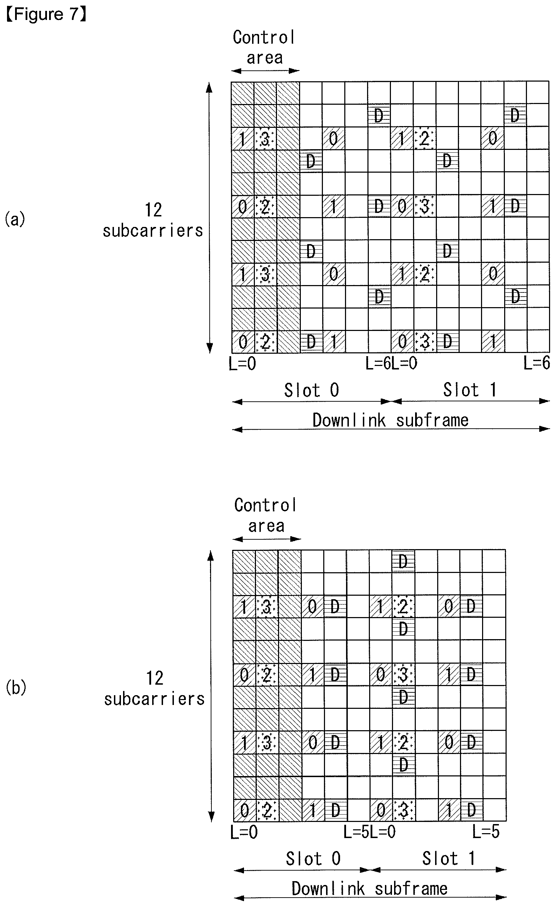

FIG. 7 illustrates a reference signal pattern mapped to a downlink resource block pair in the wireless communication system to which the present invention can be applied.

Referring to FIG. 7, as a unit in which the reference signal is mapped, the downlink resource block pair may be expressed by one subframe in the timedomain x 12 subcarriers in the frequency domain. That is, one resource block pair has a length of 14 OFDM symbols in the case of a normal cyclic prefix (CP) (FIG. 7a) and a length of 12 OFDM symbols in the case of an extended cyclic prefix (CP) (FIG. 7b). Resource elements (REs) represented as '0', '1', '2', and '3' in a resource block lattice mean the positions of the CRSs of antenna port indexes '0', '1', '2', and '3', respectively and resource elements represented as 'D' means the position of the DRS.

Hereinafter, when the CRS is described in more detail, the CRS is used to estimate a channel of a physical antenna and distributed in a whole frequency band as the reference signal which may be commonly received by all terminals positioned in the cell. That is, the CRS is transmitted in each subframe across a broadband as a cell-specific signal. Further, the CRS may be used for the channel quality information (CSI) and data demodulation.

The CRS is defined as various formats according to an antenna array at the transmitter side (base station). The RSs are transmitted based on maximum 4 antenna ports depending on the number of transmitting antennas of a base station in the 3GPP LTE system (for example, release-8). The transmitter side has three types of antenna arrays of three single transmitting antennas, two transmitting antennas, and four transmitting antennas. For instance, in case that the number of the transmitting antennas of the base station is 2, CRSs for antenna #1 and antenna #2 are transmitted. For another instance, in case that the number of the transmitting antennas of the base station is 4, CRSs for antennas #1 to #4 are transmitted.

When the base station uses the single transmitting antenna, a reference signal for a single antenna port is arrayed.

When the base station uses two transmitting antennas, reference signals for two transmitting antenna ports are arrayed by using a time division multiplexing (TDM) scheme and/or a frequency division multiplexing (FDM) scheme. That is, different time resources and/or different frequency resources are allocated to the reference signals for two antenna ports which are distinguished from each other.

Moreover, when the base station uses four transmitting antennas, reference signals for four transmitting antenna ports are arrayed by using the TDM and/or FDM scheme. Channel information measured by a downlink signal receiving side (terminal) may be used to demodulate data transmitted by using a transmission scheme such as single transmitting antenna transmission, transmission diversity, closed-loop spatial multiplexing, open-loop spatial multiplexing, or multi-user MIMO.

In the case where the MIMO antenna is supported, when the reference signal is transmitted from a specific antenna port, the reference signal is transmitted to the positions of specific resource elements according to a pattern of the reference signal and not transmitted to the positions of the specific resource elements for another antenna port. That is, reference signals among different antennas are not duplicated with each other.

In what follows, to describe a DRS in more detail, a DRS is used to demodulate data. The precoding weight used for a specific UE in MIMO antenna transmission is used without being changed in order to estimate a corresponding channel by being combined with a transmission channel transmitted from each transmission antenna when the UE receives a reference signal.

The 3GPP LTE system (for example, Release-8) supports up to four transmission antennas and defines a DRS for rank 1 beamforming. The DRS for rank 1 beamforming also represents a reference signal for antenna port index 5.

In the LTE-A system, which has evolved from the LTE system, an eNB has to be designed to support up to 8 transmitting antennas for downlink transmission. Therefore, RS also has to be supported for up to 8 transmitting antennas. Since the downlink RS is defined only up to 4 antenna ports in the LTE system, in case an eNB compliant with the LTE-A system is equipped with four or more and up to 8 downlink transmitting antennas, the RS has to be additionally defined and designed for those antenna ports. The RS used for up to 8 transmitting antenna ports has to be designed both for channel estimation and data demodulation described above.

One of important factors to be considered in designing the LTE-A system is backward compatibility; that is, an LTE terminal has to operate seamlessly in the LTE-A system and the LTE-A system also support the operation of the LTE terminal. From the viewpoint of RS transmission, the RS for up to 8 transmitting antenna ports has to be additionally defined in the time-frequency domain in which the CRS defined for the LTE system is transmitted for each subframe over the whole frequency band. If an RS pattern for up to 8 transmitting antennas is added in the LTE-A system for each subframe over the whole frequency band in the same way as applied for the CRS of the existing LTE system, RS overhead becomes too large.

In this regard, the RS newly designed in the LTE-A system is largely classified into two types: RS aimed for channel measurement for selecting MCS, PMI, and so on (CSI-RS: Channel State Information-RS, Channel State Indication-RS) and RS for data demodulation transmitted to 8 transmission antennas (DM-RS: Data Demodulation-RS).

The CSI-RS aimed for channel measurement is designed mainly for channel measurement unlike the conventional CRS which is used for data demodulation in addition to channel measurement and handover measurement. The CSI-RS for channel measurement may also be used for measuring handover. Since the CSI-RS is transmitted only for the purpose of obtaining information about channel state, it is not necessary to transmit the CSI-RS for each subframe unlike the CRS. To reduce overhead of the CSI-RS, the CSI-RS is transmitted intermittently in the time domain.

For data demodulation, a DM-RS is transmitted in a dedicated manner to the UE scheduled in the corresponding time-frequency domain. In other words, the DM-RS of a specific UE is transmitted to the area in which the corresponding UE is scheduled, namely only to the time-frequency domain in which the UE receives data.

In the LTE-A system, an eNB has to transmit a CSI-RS for all of the antenna ports. Excessive overhead may be caused to transmit a CSI-RS aimed for up to 8 transmitting antenna ports; in this regard, overhead may be reduced when the CSI-RS is transmitted intermittently along the time axis rather than being transmitted for each subframe. In other words, a CSI-RS may be transmitted periodically with a period of an integer multiple of one subframe or may be transmitted according to a particular transmission pattern. At this time, the eNB may determine the period or pattern according to which the CSI-RS is transmitted.

To measure the CSI-RS, the UE has to know the information about the transmission subframe index of the CSI-RS for each CSI-RS antenna port of the cell to which the UE belongs, time-frequency position of the CSI-RS resource element (RE) within the transmission subframe, and CSI-RS sequence.

In the LTE-A system, the eNB has to transmit the CSI-RS to each of up to 8 antenna ports. Resources used for CSI-RS transmission of different antenna ports have to be orthogonal to each other. By mapping the CSI-RS associated with the respective antenna ports to different REs when one eNB transmits the CSI-RS to different antenna ports, these resources may be allocated orthogonally to each other according to the FDM/TDM scheme. Similarly, the CSI-RS associated with different antenna ports may be transmitted according to the CDM scheme in which the CSI-RS is mapped to orthogonal codes.

When informing the UE belonging to the same cell of the information about the CSI-RS, the eNB has to first inform the UE of the information about time-frequency to which the CSI-RS associated with the respective antenna ports. More specifically, the information may include numbers of subframes to which the CSI-RS is transmitted, period with which the CSI-RS is transmitted, subframe offset with which the CSI-RS is transmitted, the number of the OFDM symbol to which the CSI-RS RE of a specific antenna is transmitted, frequency spacing, and offset or shift value of the RE along the frequency axis.

The CSI-RS is transmitted through one, two, four, or eight antenna ports. At this time, the antenna port used is p = 15, p = 15, 16, p = 15, ..., 18, and p = 15, ..., 22, respectively. The CSI-RS may be defined only for the subcarrier interval $\Delta f$ = 15 kHz.

The conditions for (k',l') (where k' represents the subcarrier index within a resource block, and l' represents the OFDM symbol index within a slot) and n_s are determined according to the CSI-RS configuration shown in Table 3 or Table 4 below.

Table 3 illustrates mapping of (k',l') from the CSI-RS configurations in a general CP.

[Table 3]

| CSI reference signal configuration | Number of CSI reference signals configured | | | | | |
|---|---|---|---|---|---|---|
| | 1 or 2 | | 4 | | 8 | |
| | (k',l') | $n_s$ mod 2 | (k',l') | $n_s$ mod 2 | (k',l') | $n_s$ mod 2 |
| 0 | (9,5) | 0 | (9,5) | 0 | (9,5) | 0 |
| 1 | (11,2) | 1 | (11,2) | 1 | (11,2) | 1 |
| 2 | (9,2) | 1 | (9,2) | 1 | (9,2) | 1 |

(continued)

| CSI reference signal configuration | Number of CSI reference signals configured | | | | | |
| --- | --- | --- | --- | --- | --- | --- |
| | 1 or 2 | | 4 | | 8 | |
| | (k',l') | $n_s$ mod 2 | (k',l') | $n_s$ mod 2 | (k',l') | $n_s$ mod 2 |
| 3 | (7,2) | 1 | (7,2) | 1 | (7,2) | 1 |
| 4 | (9,5) | 1 | (9,5) | 1 | (9,5) | 1 |
| 5 | (8,5) | 0 | (8,5) | 0 | | |
| 6 | (10,2) | 1 | (10,2) | 1 | | |
| ... | | | | | | |
| 18 | (3,5) | 1 | | | | |
| 19 | (2,5) | 1 | | | | |
| 20 | (11,1) | 1 | (11,1) | 1 | (11,1) | 1 |
| 21 | (9,1) | 1 | (9,1) | 1 | (9,1) | 1 |
| 22 | (7,1) | 1 | (7,1) | 1 | (7,1) | 1 |
| 23 | (10,1) | 1 | (10,1) | 1 | | |
| ... | | | | | | |
| 29 | (2,1) | 1 | | | | |
| 30 | (1,1) | 1 | | | | |
| 31 | (0,1) | 1 | | | | |

Table 4 illustrates mapping of (k',l') from CSI-RS configurations in an extended CP.

[Table 4]

| CSI reference signal configuration | Number of CSI reference signals configured | | | | | |
| --- | --- | --- | --- | --- | --- | --- |
| | 1 or 2 | | 4 | | 8 | |
| | (k',l') | $n_s$ mod 2 | (k',l') | $n_s$ mod 2 | (k',l') | $n_s$ mod 2 |
| 0 | (11,4) | 0 | (11,4) | 0 | (11,4) | 0 |
| 1 | (9,4) | 0 | (9,4) | 0 | (9,4) | 0 |
| 2 | (10,4) | 1 | (10,4) | 1 | (10,4) | 1 |
| 3 | (9,4) | 1 | (9,4) | 1 | (9,4) | 1 |
| 4 | (5,4) | 0 | (5,4) | 0 | | |
| 5 | (3,4) | 0 | (3,4) | 0 | | |
| 6 | (4,4) | 1 | (4,4) | 1 | | |
| 7 | (3,4) | 1 | (3,4) | 1 | | |
| 8 | (8,4) | 0 | | | | |
| ... | | | | | | |
| 17 | (10,1) | 1 | (10,1) | 1 | (10,1) | 1 |
| 18 | (9,1) | 1 | (9,1) | 1 | (9,1) | 1 |
| 19 | (5,1) | 1 | (5,1) | 1 | | |
| 20 | (4,1) | 1 | (4,1) | 1 | | |
| ... | | | | | | |
| 25 | (2,1) | 1 | | | | |

(continued)

| CSI reference signal configuration | Number of CSI reference signals configured | | | | | |
|---|---|---|---|---|---|---|
| | 1 or 2 | | 4 | | 8 | |
| | (k',l') | $n_s$ mod 2 | (k',l') | $n_s$ mod 2 | (k',l') | $n_s$ mod 2 |
| 26 | (1,1) | 1 | | | | |
| 27 | (0,1) | 1 | | | | |

Referring to Table 3 and Table 4, in the CSI-RS transmission, a maximum of 32 (in the case of a general CP) or a maximum of 28 (in the case of an extended CP) different configurations are defined in order to reduce inter-cell interference (ICI) in a multi-cell environment including a heterogeneous network (HetNet) environment.

The CSI-RS configurations are different according to the number of antenna ports of a cell and a CP, and adjacent cells may have different configurations as many as possible. Also, the CSI-RS configurations may be divided into a case in which the CSI-RS configurations are applied to both an FDD frame and a TDD frame and a case in which the CSI-RS configurations are applied only to the TDD frame.

On the basis of Table 3 and Table 4, (k',l') and $n_s$ are defined according to CSI-RS configurations, and time and frequency resources in which each CSI-RS antenna port is used in CSI-RS transmission are determined.

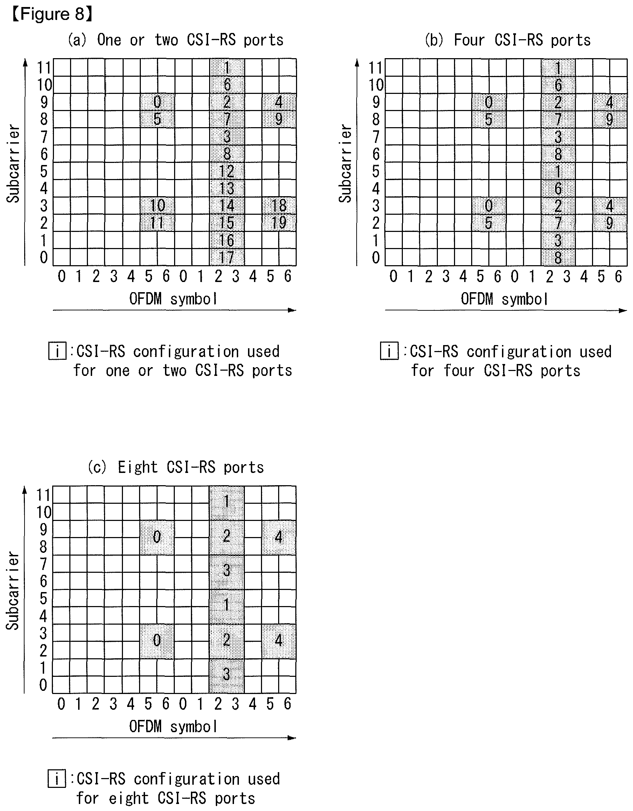

FIG. 8 is a view illustrating a CSI-RS configuration in a wireless communication system to which the present disclosure is applicable.

FIG. 8(a) illustrates twenty CSI-RS configurations that may be used for CSI-RS transmission by one or two CSI-RS antenna ports, FIG. 8(b) illustrates ten CSI-RS configurations that may be used by four CSI-RS antenna ports, and FIG. 8(c) illustrates five CSI-RS configurations that may be used for CSI-RS transmission by eight CSI-RS antenna ports.

In this manner, a radio resource (i.e., an RE pair) in which the CSI-RS is transmitted is determined according to each CSI-RS configuration.

When one or two antenna ports are set for CSI-RS transmission regarding a specific cell, a CSI-RS is transmitted in a radio resource according to a set CSI-RS configuration among the twenty CSI-RS configurations illustrated in FIG. 8(a).

Similarly, when four antenna ports are set for CSI-RS transmission regarding a specific cell, a CSI-RS is transmitted in a radio resource according to a set CSI-RS configuration among the ten CSI-RS configurations illustrated in FIG. 8(b). Also, when eight antenna ports are set for CSI-RS transmission regarding a specific cell, a CSI-RS is transmitted in a radio resource in accordance with a set CSI-RS configuration among five CSI-RS configurations illustrated in FIG. 8(c).

A CSI-RS regarding each antenna port is CDM-ed to the same radio resource by two antenna ports (i.e., {15,16}, {17,18}, {19,20}, {21,22}) so as to be transmitted.

For example, regarding the antenna ports 15 and 16, a CSI-RS complex symbol of each of the antenna ports 15 and 16 is the same but multiplied by different orthogonal codes (e.g., Walsh codes) so as to be mapped to the same radio resource. [1 1] is multiplied to a complex symbol of the CSI-RS regarding the antenna port 15 and [1 -1] is multiplied to a complex symbol of the CSI-RS regarding the antenna port 16 so as to be mapped to the same radio resource. This is no different for the antenna ports {17,18}, {19,20}, and {21,22}.

The UE may detect a CSI-RS regarding a specific antenna by multiplying a multiplied code to a transmitted symbol. That is, in order to detect a CSI-RS regarding the antenna port 15, the UE multiplies the multiplied code [1, 1] and, in order to detect a CSI-RS regarding the antenna port 16, the UE multiplies the multiplied code [1 -1].

Referring to FIGS. 8(a) to 8(c), when corresponding to the same CSI-RS configuration index, a radio resource in accordance with a CSI-RS configuration with a large number of antenna ports includes a radio resource in accordance with a CSI-RS with a small number of antenna ports. For example, in the case of a CSI-RS configuration 0, a radio resource regarding eight antenna ports includes a radio resource regarding four antenna ports and a radio resource regarding one or two antenna ports.

In a cell, a plurality of CSI-RS configurations may be used. A non-zero power (NZP) CSI-RS may use only zero or one CSI-RS configuration, and a zero power (ZP) CSI-RS may use zero or several CSI-RS configurations.

By each bit set to 1 in a ZP CSI-RS, 16-bit bitmap set by a higher layer, a UE assumes zero transmission power in REs corresponding four CSI-RS columns (excluding a case of being repeated with an RE assuming an NZP CSI-RS set by a higher layer) in Table 3 and Table 4. The most significant bit (MSB) corresponds to a lowest CSI-RS configuration index, and a following bit within a bitmap corresponds to a following CSI-RS configuration index in order.

A CSI-RS is transmitted only in a downlink slot and a CSI-RS subframe configuration satisfying the condition of $n_s$ mod 2 in Table 10 and Table 11 above.

In the case of a frame structure type 2 (TDD), a CSI-RS is not transmitted in a special subframe, a subframe that collides with a synchronization signal (SS), a PBCH, or a system information block type (SIB) 1 message transmission, or a subframe set for a paging message transmission.

Also, an RE in which a CSI-RS regarding any antenna port belonging to an antenna port set S (S={15}, S={15,16}, S={17,18}, S={19,20} 또는 S={21,22}) is transmitted is not used in a CSI-RS transmission of a PDSCH or another antenna port.

Since time-frequency resources used in CSI-RS transmission cannot be used in data transmission, data throughput is reduced as CSI-RS overhead is increased. In consideration of this, a CSI-RS is configured not to be transmitted in every subframe but transmitted in every predetermined transmission period corresponding to a plurality of subframes. Here, CSI-RS transmission overhead may be significantly lowered, compare with a case in which the CSI-RS is transmitted in every subframe.

A subframe period for CSI-RS transmission (hereinafter, referred to as "CSI periodicity") ($T_{CSI-RS}$) and a subframe offset ($\Delta_{CSI-RS}$) are shown in Table 5 below.

Table 5 illustrates a CSI-RS subframe configuration.

[Table 5]

| CSI-RS-SubframeConfig $I_{CSI-RS}$ | CSI-RS periodicity $T_{CSI-RS}$ (subframes) | CSI-RS subframe offset $\Delta_{CSI-RS}$ (subframes) |
|---|---|---|
| 0 - 4 | 5 | $I_{CSI-RS}$ |
| 5 - 14 | 10 | $I_{CSI-RS}$ -5 |
| 15 - 34 | 20 | $I_{CSI-RS}$ - 15 |
| 35 - 74 | 40 | $I_{CSI-RS}$ - 35 |
| 75 - 154 | 80 | $I_{CSI-RS}$ - 75 |

Referring to Table 5, a CSI-RS periodicity ($T_{CSI-RS}$) and a subframe offset ($\Delta_{CSI-RS}$) are determined according to CSI-RS subframe configuration ($I_{CSI-RS}$).

The CSI-RS subframe configuration of Table 5 may be set to any one of a "SubframeConfig" field and a "zeroTxPowerSubframeConfig" field. The CSI-RS subframe configuration may be separately set for a NZP CRI-RS and a ZP-CSI-RS.

A subframe including a CSI-RS satisfies Equation 12 below.

## [Equation 12]

$$\left(10n_{\mathrm{f}} + \lfloor n_s/2 \rfloor - \Delta_{\mathrm{CSI-RS}}\right) \bmod T_{\mathrm{CSI-RS}} = 0$$

In Equation 12, $T_{CSI-RS}$ denotes a CSI-RS periodicity, $\Delta_{CSI-RS}$ denotes a subframe offset value, $n_f$ denotes a system frame number, and $n_s$ denotes a slot number.

In the case of a UE in which a transmission mode 9 is set for a serving cell, one CSI-RS resource configuration may be set in the UE. In the case of a UE in which a transmission mode 10 is set for a serving cell, one or more CSI-RS resource configuration(s) may be set in the UE.

Parameters are set for each of the CSI-RS resource configuration through higher layer signaling as follows.

- CSI-RS resource configuration identity, when a transmission mode 10 is set
- CSI-RS port number
- CSI-RS configuration (Please refer to Table 3 and Table 4)
- CSI-RS subframe configuration ($I_{CSI-RS}$) (Please refer to Table 5)
- Transmission power ($P_c$) when a transmission mode 9 is set
- Transmission power ($P_c$) for CSI feedback with respect to each CSI process when the transmission mode 10 is set. When CSI subframe sets $C_{CSI,0}$ and $C_{CSI,1}$ are set by a higher layer with respect to a CSI process, $P_c$ is set for each of CSI subframe sets of the CSI process.
- Pseudo-random sequence generator parameter ($n_{ID}$)
- Higher layer parameter ('qcl-CRS-Info-r11') including QuasiCo-located (QCL) scrambling identity (qcl-Scramblingldentity-r11) for a QCL type B UE assumption, a CRS port count (crs-PortsCount-r11), and MBSFN subframe configuration list (mbsfn-SubframeConfigList-r11) parameter, when the transmission mode 10 is set.

When a CSI feedback value derived by a UE has a value with a [-8, 15] dB range, $P_c$ is assumed as a ratio of PDSCH EPRE to a CSI-RS EPRE. Here, the PDSCH EPRE corresponds to a symbol in which a ratio there of to the CRS EPRE is $\rho_A$.

In the same subframe of a serving cell, a CSI-RS and a PMCH are not set together.

In a case in which four CRS antenna ports are set in a frame structure type 2, a CSI-RS configuration index that belongs to a [20-31] set (please refer to Table 3) in the case of a general CP or a [16-27] set (please refer to Table 4) in the case of an extended CP is not set in a UE.

In a UE, it may be assumed that a CSI-RS antenna port of a CSI-RS resource configuration has a QCL relationship with respect to delay spread, Doppler spread, Doppler shift, average gain, and average delay.

In a UE in which the transmission mode 10 and the QCL type B are set, it may be assumed that antenna ports 0-3 corresponding to a CSI-RS configuration and antenna ports 15-22 corresponding to a CSI-RS resource configuration have a QCL relationship with respect to Doppler spread and Doppler shift.

In the case of a UE in which the transmission mode 10 is set, one or more channel-state information-interference measurement (CSI-IM) resource configurations.

Following parameters for each of CSI-IM resource configurations may be set through higher layer signaling.

- ZP CSI-RS configuration (please refer to Table 3 and Table 4)
- ZP CSI RS subframe configuration ($I_{CSI-RS}$) (please refer to Table 5)

The CSI-IM resource configuration is the same as any one of set ZP CSI-RS resource configurations.

In the same subframe of a serving cell, a CSI-IM resource and a PMCH are not simultaneously set.

### Cell Measurement/Measurement Report

To perform one or more methods from among various methods for ensuring mobility of a UE, the UE reports a cell measurement result to the eNB (or network).

In the 3GPP LTE/LTE-A system, a cell-specific reference signal (CRS) is transmitted through the 0-the, 4-th, 7-th, and 11-th OFDM symbol within each subframe along the time axis, and the CRS is used basically for cell measurement. In other words, the UE performs cell measurement by using the CRS received respectively from a serving cell and a neighboring cell.

Cell measurement includes RRM (Radio Resource Management) measurement such as RSRP (Reference Signal Received Power) which measures signal strength of a serving cell and a neighboring cell or signal strength with respect to the total received power, RSSI (Received Signal Strength Indicator), and RSRQ (Reference Signal Received Quality); and RLM (Radio Link Monitoring) measurement which measures link quality with respect to a serving cell and is used to evaluate a radio link failure.

RSRP is a linear average of power distribution of an RE to which a CRS is transmitted within a measurement frequency band. To determine RSRP, a CRS (R1) corresponding to antenna port '1' may be additionally used. To determine RSRP, the measurement frequency band used by the UE and the number of Res used within a measurement interval may be determined by the UE as long as the corresponding measurement accuracy requirement is satisfied. Also, the power per RE may be determined from received energy within the remaining symbols except for the cyclic prefix (CP).

RSSI is obtained as a linear average of total power from all of the sources received by the corresponding UE, including interference from a serving cell, non-serving cell, and neighboring channel on a co-channel among OFDM symbols including the RS corresponding to the antenna port '0' within a measurement band; and thermal noise. In case specific subframes for performing RSRQ measurement are indicated by upper layer signaling, RSSI is measured through all of the OFDM symbols within the specified subframes.

RSRQ is calculated by N x RSRP/RSSI. At this point, N represents the number of RBs in the RSSI measurement bandwidth. Also, in the aforementioned equation, measurement of the numerator and denominator may be performed in the same RB set.

The eNB may deliver configuration information for measurement to the UE through upper layer signaling (for example, RRC connection reconfiguration message).

The RRC connection reconfiguration message includes radio resource configuration dedicated ('radioResourceConfigDedicated') information element (IE) and measurement configuration ('measConfig') IE.

'measConfig' IE specifies measurement to be performed by the UE and includes configuration information for intra-frequency mobility, inter-frequency mobility, and inter-RAT mobility in addition to configuration of a measurement gap.

In particular, 'measConfig' IE includes 'measObjectToRemoveList' indicating the list of measurement objects ('measObject') to be removed from measurement and 'measObjectTo AddModList' indicating a list of objects to be added or modified. Also, 'measObject' includes 'MeasObjectCDMA2000', 'MeasObjectEUTRA', and 'MeasObjectGERA' according to communication technologies.

'RadioResourceConfigDedicated' IE is used to set up/modify/release a radio bearer, modify MAC main configuration, modify Semi-Persistent Scheduling (SPS) configuration, and modify dedicated physical configuration.

'RadioResourceConfigDedicated' IE includes 'measSubframePattern-Serv' field indicating a time domain measurement resource restriction pattern for measurement of a serving cell. Also, 'RadioResourceConfigDedicated' IE includes 'measSubframeCellList' indicating a neighboring cell to be measured by the UE and 'measSubframePattern-Neigh' indicating a time domain measurement resource restriction pattern for measuring a neighboring cell.

The time domain measurement resource restriction pattern set up for a measurement cell (which includes a serving cell and a neighboring cell) may indicate at least one subframe for each radio frame to perform RSRQ measurement. RSRQ measurement is not performed outside the subframe indicated by the time domain measurement resource restriction pattern set up for a measurement cell.

As described above, the UE is limited to measure RSRQ only in an interval set up by the subframe pattern ('measSubframePattern-Serv') for serving cell measurement and the subframe pattern ('measSubframePattern-Neigh') for neighboring cell measurement.

However, though RSRP is not constrained in the measurement within the aforementioned pattern, it is desirable to perform measurement only according to the pattern to satisfy accuracy requirement.

## Massive MIMO

Active Antenna System (AAS) is being considered to be introduced for wireless communication systems compliant with the LTE release-12 or later.

Different from existing manual antenna systems in which an amplifier capable of adjusting signal phase and magnitude is separated from the antenna, individual antennas of an AAS are structured to include active elements such as the amplifier.

The AAS does not require separate cable, connector, and other hardware for connecting the amplifier and antennas for using an active antenna, thereby providing high efficiency in terms of energy usage and operating costs. In particular, since AAS supports electronic beam control for each antenna, advanced MIMO techniques such as sophisticated beam pattern forming which takes into account beam direction and beam width or 3D beam pattern forming may be realized.

Due to introduction of advanced antenna systems such as the AAS, a massive MIMO structure having a plurality of input and output antennas and multidimensional antenna structure is also being considered. As one example, in case a 2D antenna array is formed unlike the conventional straight-line type antenna array, a 3D beam pattern may be formed by an active antenna of the AAS.

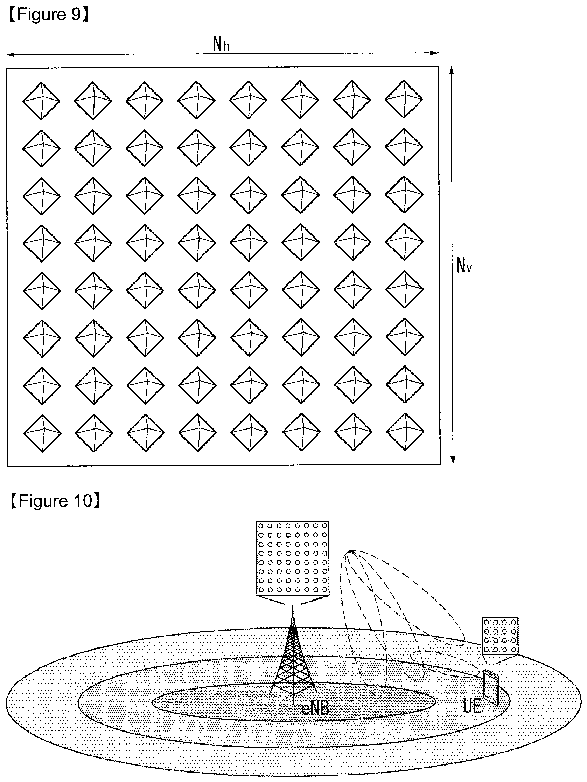

FIG. 9 illustrates one example of a 2D active antenna system having 64 antenna elements to which the present invention may be applied.

FIG. 9 shows an example of an ordinary 2D antenna array in a square-shape with $N_t = N_v \cdot N_h$ antennas.

In the figure, $N_h$ represents the number of antenna columns in horizontal direction, and $N_v$ represents the number of antenna rows in vertical direction.

In view of a transmitting antenna, in case the 3D beam pattern is employed, semi-static or dynamic beam forming may be performed not only in the horizontal direction but also in the vertical direction of the beam, and as one example of the aforementioned property, an application of sector forming in vertical direction may be considered.

Also, in view of a receiving antenna, when a receiving beam is formed by using massive receiving antennas, a signal power increasing effect due to antenna array gain may be expected. Therefore, in the case of uplink, an eNB is capable of receiving a signal transmitted from a UE through a plurality of antennas, and at this time, the UE is allowed to set its transmission power at a very low level by taking into account the gain of the massive receiving antennas to reduce the effect due to interference.

FIG. 10 illustrates a system in which an eNB or a user equipment is equipped with a plurality of transmitting/receiving antennas capable of AAS-based 3D beam forming in a wireless communication system to which the present invention may be applied.

FIG. 10 depicts the example described above and illustrates a 3D MIMO system using a 2D antenna array (namely 2D-AAS).

**Cell coverage of massive MIMO**

If it is assumed that a multiple antenna system, for example, a system having N transmitting antennas performs transmission by keeping the total transmission power to be the same as a single antenna system, beamforming may be performed so that received power is up to N times higher at a particular position.

In the eNB equipped with multiple antennas, too, the channel used for delivering CRS, PSS/SSS, PBCH, and broadcast information does not perform beamforming in a specific direction so that all of the UEs within the coverage of the eNB may receive the information.

Different from the above, the PDSCH, a channel delivering unicast information to a specific UE, increases transmission efficiency by performing beamforming according to the position of the corresponding UE and link conditions. In other words, the transmission data stream of the PDSCH is precoded to form a beam along a particular direction and transmitted through multiple antenna ports. Therefore, in a typical situation where transmission power of the CRS is the same as that of the PDSCH, the received power of the precoded PDSCH beamformed toward a specific UE may be increased up to N times of the average received power of the CRS.

The LTE Rel-11 system supports an eNB having up to 8 transmitting antennas, which indicates that the received power of the precoded PDSCH may be 8 times higher than the average received power of the CRS. However, in case an eNB uses 100 or more transmitting antennas due to introduction of a massive MIMO system in the future specification, a difference more than 100 times in the received power between the CRS and the precoded PDSCH may be obtained. In conclusion, due to introduction of a massive MIMO system, the coverage area of the CRS transmitted by a specific eNB does not coincide with the coverage area of the DM-RS based PDSCH.

This phenomenon may occur particularly when the difference between the numbers of transmitting antennas of two adjacent eNBs is large. As a typical example, suppose a macro cell having 64 transmitting antennas is adjacent to a micro cell (for example, pico cell) having a single transmitting antenna. In the initial deployment process of a massive MIMO system, since a macro cell which has a large number of served UEs is expected first to increase the number of antennas, the difference between the numbers of transmitting antennas of neighboring eNBs becomes large for the case of a heterogeneous network in which a macro cell, micro cell, and pico cell are mixed.

For example, in the case of a pico cell having a single transmitting antenna, the coverage area of the CRS coincides with that of the PDSCH.

However, in the case of a macro cell having 64 transmitting antennas, the coverage area of the PDSCH exceeds the coverage area of the CRS. Therefore, if the initial connection and handover are determined according only to RSRP or RSRQ which represents reception quality of the CRS along the boundary between the macro cell and the pico cell, the eNB which provides the best quality of the PDSCH may not be selected as a serving cell. As a simple remedy to this problem, the PDSCH received power of an eNB having N transmitting antennas may be assumed to be N times larger; however, taking into account a situation in which the eNB is not able to perform beamforming in all directions, the aforementioned assumption is not an optimal solution.

In what follows, described will be a method for a UE to perform CSI measurement and report operation to reduce latency.

The methods described below may not only be applied to 3D-MIMO and massive MIMO system but also be extended to those applications for amorphous cell environments.

First, 3D-MIMO system will be described briefly.

The 3D-MIMO system is based on the LTE standard (Rel-12) and is one of optimized transmission methods suited for single-cell 2D-AAS (Adaptive Antenna System) as shown in FIG. 9, which is capable of providing the following operations.

FIG. 10 provides an example in which CSI-RS ports are composed of 8-by-8 (8 x 8) antenna array. As shown in the figure, to each of the 8 antennas arranged vertically, one precoded CSI-RS port specified by 'UE-dedicated beam coefficients' optimized for a specific target UE is mapped so that a (vertically precoded) CSI-RS is set up/transmitted through a total of 8-ports in horizontal direction.

Through the aforementioned operation, the UE is capable of performing the conventional CSI feedback with respect to the 8-ports.

In the end, the eNB transmits to the UE a (precoded) CSI-RS 8 ports to which a beam gain in vertical direction optimized to individual UEs (or a specific UE group) has already been applied

Therefore, since the UE measures a CSI-RS which has already passed a radio channel, the UE may already obtain a beam gain effect in a vertical direction of the radio channel through the CSI measurement and reporting operation with respect to the (vertically precoded) CSI-RS even if the UE has performed the same feedback according to the conventional codebook in the horizontal direction.

At this time, methods for determining a vertical beam optimized for individual UEs may include (1) a method using an RRM report result due to a (vertically precoded) small-cell discovery RS (DRS) and (2) a method in which an eNB receives a sounding RS (SRS) of a UE along an optimal received beam direction and converts the corresponding received beam direction to a DL optimized beam direction using channel reciprocity property.

According to the conventional operation, in case the eNB determines that the UE-dedicated best V-beam direction has been changed due to the UE's mobility, the eNB reconfigures all of the RRC settings related to CSI-RS and associated CSI process.

As described above, in case RRC reconfiguration is required, latency in the RRC level (for example, tens to hundreds of ms) is unavoidable.

In other words, in a network-scale, a target V-beam direction is divided into four directions, for example, and along each V-direction, a separate precoded 8 port CSI-RS is transmitted at the corresponding separate transmission resource position.

Also, since each UE has to perform CSI measurement and reporting for a specific, single CSI-RS configuration among the 8 port CSI-RSs, the UE has to perform the RRC reconfiguration procedure in conjunction with the network by using a CSI-RS configuration to be changed when the target V-direction is changed.

**2D Planar Antenna Array Model**

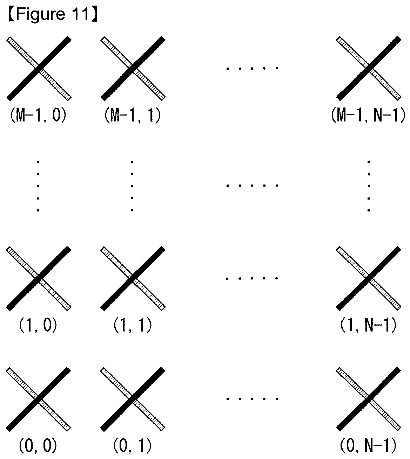

FIG. 11 illustrates one example of a polarization-based 2D plane antenna array model.

In other words, FIG. 11 shows an example of a 2D AAS (Active Antenna System) having cross polarization.

With reference to FIG. 11, a 2D planar antenna array model may be represented by (M, N, P).

In the model, M represents the number of antenna elements with polarization in the same column, N the number of columns in horizontal direction, and P the number of polarization dimensions.

In FIG. 11, in the case of cross-polarization, P = 2.

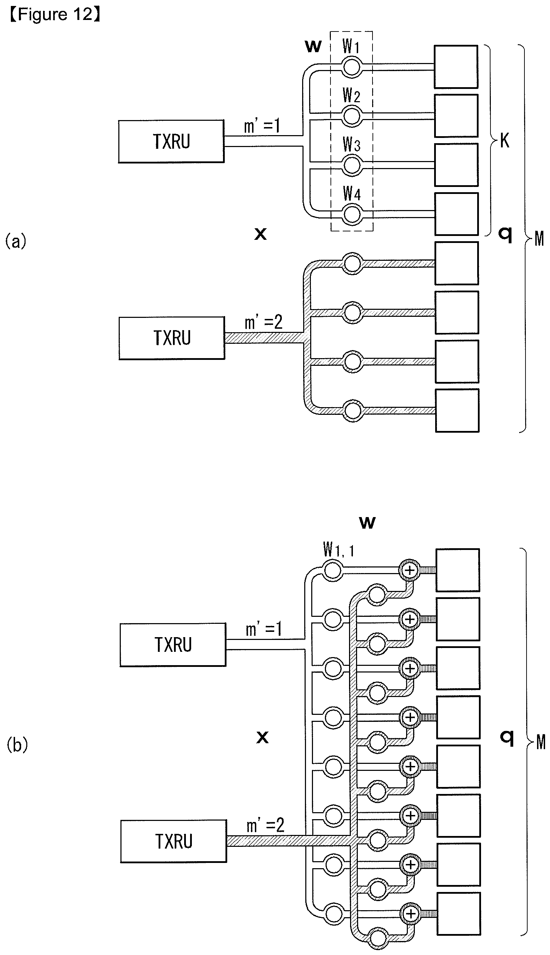

FIG. 12 illustrates one example of a transceiver unit (TXRU) model.

The TXRU configuration corresponding to the antenna array model configuration (M, N, P) of FIG. 12 may be expressed by (MTXRU, N, P).

In this case, MTXRU indicates the number of TXRUs in the same column of the 2D array and exhibiting the same polarization, and MTXRU <= M for all cases.

Also, the TXRU virtualization model is defined by the relationship between the signal of the TXRU and the signal of antenna elements.

At this point, q represents a transmitted signal vector of M antenna elements in the same column exhibiting the same polarization, w and W represent the wideband TXRU virtualization weight vector and matrix respectively, and x represents a signal vector of MTXRU TXRUs.

More specifically, FIG. 12a illustrates a TXRU virtualization model option-1 (sub-array partition model), and FIG. 12b illustrates a TXRU virtualization model option-2 (full connection model).

In other words, a TXRU virtualization model is divided into a sub-array and full-connection models as shown in FIGs. 12a and 12b according to a correlation relationship between antenna elements and TXRU.

Also, mapping between CSI-RS ports and TXRUs may be 1-to-1 or 1-to-many.

In the case of a massive MIMO system using a 2D-AAS antenna structure as shown in FIG. 10, a UE needs to be designed to have a large number of CSI-RS ports to obtain CSI through the CSI-RS transmitted from an eNB and to report the CSI to the eNB.

In other words, in addition to supporting a CSI-RS pattern for the conventional 1, 2, 4, or 8 ports, a new CSI-RS pattern requiring more ports than the conventional CSI-RS pattern, such as 12 port CSI-RS pattern and 16 port CSI-RS pattern and configuration method have to be taken into consideration for massive MIMO systems.

The N-port CSI-RS pattern in this document may be interpreted to be the same as the N-port CSI-RS resource.

At this time, N-port CSI-RS resource or N-port CSI-RS pattern is a resource (group) representing REs (or a group of REs) to which the CSI-RS is transmitted through N ports, and one or more N-port CSI-RS resources or patterns may exist within one or more subframes.

A plurality of N-port CSI-RS resources may be expressed as a N-port CSI-RS resource pool.

For example, a 4-port CSI-RS resource comprises 4 REs, and the number of antenna port to which CSI-RS is transmitted is mapped to each RE.

As in a massive MIMO system, for a transmitter (for example, an eNB) equipped with a large number (for example, MNP) of transmit antenna elements to support effective (closed-loop) MIMO transmission, a UE has to be set up with a Q-port CSI-RS pattern (for example, Q <= MNP).

This is so because the UE has to measure the configured Q-port CSI-RS together and based on the measurement, has to support the operation of calculating and reporting CSI.

As one example, the Q-port CSI-RS set up for the UE may be a non-precoded CSI-RS.

The non-precoded CSI-RS may be expressed by type A or type B.

The non-precoded CSI-RS denotes the CSI-RS transmitted by the transmitter without using beamforming and in most cases, may be transmitted such that each CSI-RS port having a wide beamwidth is transmitted.

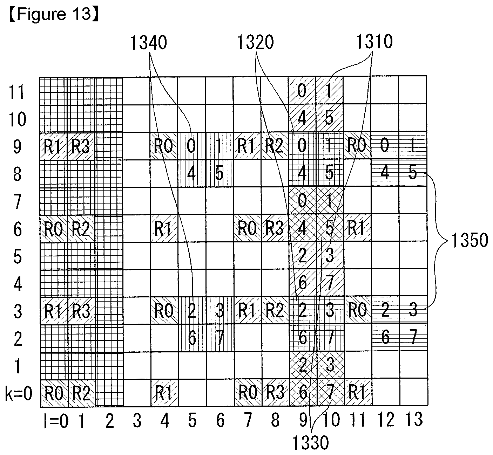

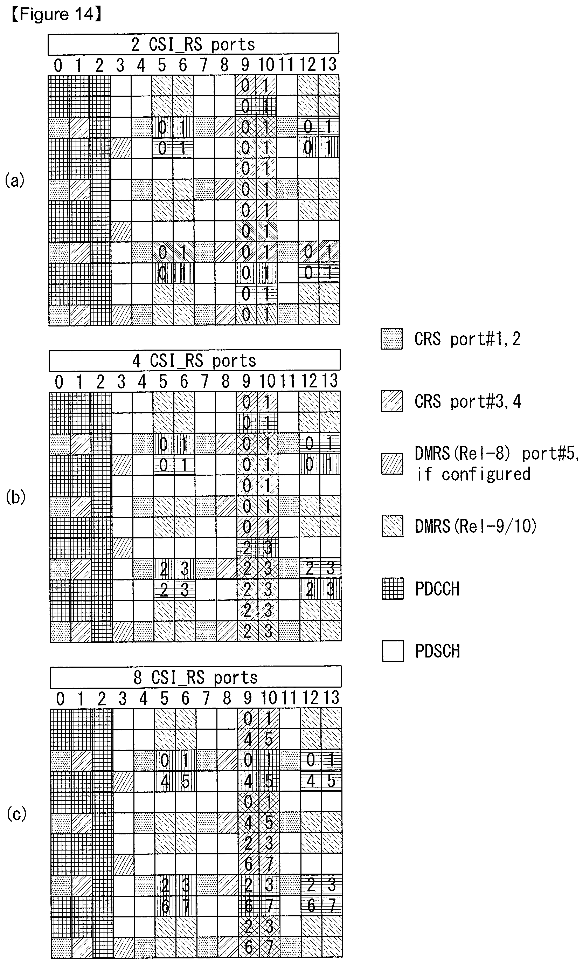

In what follows, with reference to FIGs. 13 and 14, a conventional CSI-RS pattern (or CSI-RS resource) will be descried in more detail.

FIG. 13 illustrates one example of an 8-port CSI-RS resource mapping pattern to which a method according to the present invention may be applied.

In other words, FIG. 13 illustrates a resource or resource pattern capable of transmitting CSI-RS having 8 antenna ports in a resource block (RB) comprising 12 subcarriers in the LTE(-A) system.

In FIG. 13, a hatched part corresponds to one CSI-RS resource (or one CSI-RS pattern) 1310, 1320, 1330, 1340, 1350.

In other words, in the case of FIG. 13, one subframe holds 5 CSI-RS resources or 5 CSI-RS patterns.

With reference to FIG. 13, a CSI-RS for a single port is transmitted being spread over two OFDM symbols.

Two CSI-RSs share two REs, and two CSI-RSs shared by the two REs may be distinguished from each other using orthogonal code.

In FIG. 13, the REs represented by the number '0' and '1' indicate two REs to which CSI-RS port 0 and 1 are transmitted.

In this document, for the convenience of description, such expressions as CSI-RS port 0 and 1 are used, but the expression of CSI-RS port 0 or 1 may be expressed in the form of an index such as CSI-RS port 15 or 16 to distinguish the CSI-RS from other types of RS such as CRS or UE-specific RS.

The CSI-RS may be set up to have 1, 2, and 4 ports in addition to 8 ports.

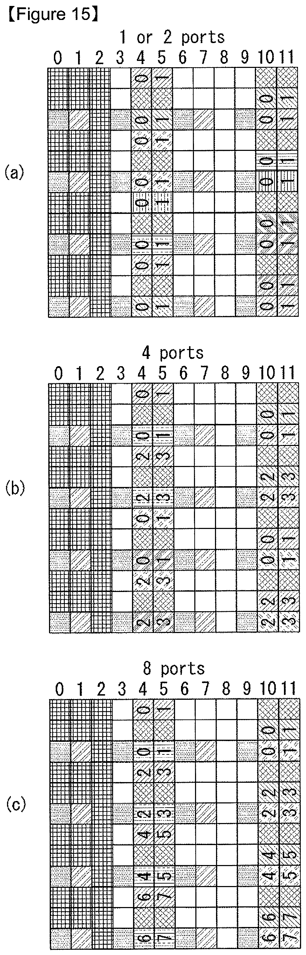

As can be seen from Table 3 and FIG. 15, being common to the frame structure type 1 (FDD mode) and type 2 (TDD mode) of the LTE system, the 8-port CSI-RS has only 5 CSI-RS transmission patterns (or 5 CSI-RS resources) in one subframe.

FIG. 14 illustrates one example of CSI-RS configuration in a normal CP to which a method according to the present invention may be applied.

In other words, FIGs. 14a, 14b, and 14c illustrate examples of 2-port, 4-port, and 8-port CSI-RS configuration, respectively.

In FIGs. 14a, 14b, and 14c, each hatched part corresponds to one CSI-RS resource or one CSI-RS pattern.

FIG. 15 illustrates one example of CSI-RS configuration in an extended CP to which a method according to the present invention may be applied.

In other words, FIG. 15 illustrates a CSI-RS configuration or pattern when the number of CSI-RS antenna ports is 1, 2, and 4 for a subframe to which the extended CP is applied.

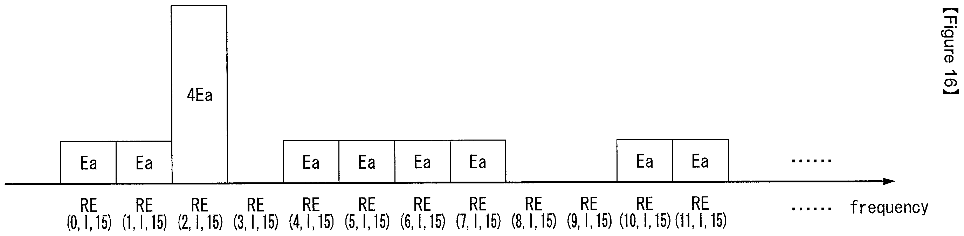

FIG. 16 illustrates one example of power boosting with respect to a reference signal multiplexed according to FDM scheme.

More specifically, FIG. 16 illustrates one example of 6dB RS power boosting with respect to a Reference Signal (RS) multiplexed according to the FDM scheme.

First, RE(k, l, n) indicates a resource element (RE) for a CSI-RS transmitted from the n-th subframe, k-th subcarrier, and l-th OFDM symbol.

Taking into account power sharing among subcarriers of the same OFDM symbol, in case there is no RS transmission to the RE(k', l, n), where $k \neq k'$, when the corresponding OFDM symbol performs RS transmission, RS power boosting is possible by diverting transmission power of RE(k',l,n) to RE(k,l,n) transmission (of the same OFDM symbol or a different subcarrier).

The aforementioned operation will be described in more detail with reference to FIG. 16. The example of FIG. 16 shows a situation in which transmission of NZP (Non-Zero Power) CSI-RS port 15 is performed through RE (2, 1, 15) for the case of 8-port CSI-RS.

Also, RE(3,1,15), RE(8,1,15), and RE(9,1,15) correspond to power muting to avoid causing interference on transmission of NZP CSI-RS port 17 to 22.

In this case, RE(2,1,15) shares power of power-muted RE(s) and uses the shared power for CSI-RS transmission with a total power of 4Ea.

Here, Ea represents the energy per average RE (EPRE).

In the current LTE specification, the maximum allowable EPRE is limited to 6 dB power boosting (namely, 4Ea).

Therefore, the maximum number of frequency division multiplexed (FDM) CSI-RS ports that may be supported in a PRB (Physical Resource Block) pair is 4.

As described above, if the power boosting restriction of the FDM CSI-RS port is taken into consideration, antenna port configuration such as 12-port or 16 port which are dealt with in the FD-MIMO (or enhanced MIMO or massive MIMO) are not allowed to use full power.

In other words, as one example of the aforementioned situation, in the case of CSI-RS 16-port, 1/16 of the total power is assigned to each CSI-RS port.

At this time, in case the power boosting using the 4-port FDM described above is used, 1/4 of the total power is made available for each CSI-RS port, still making it difficult to use the full power.

Therefore, to solve the aforementioned problem, the present invention proposes a CSI-RS configuration method using more than 8 ports based on Code Division Multiplexing (CDM) scheme.

In what follows, a CSI-RS resource configuration method using more than 8 ports according to the present invention will be described in detail with referenced to the examples using 12 and 16 ports.

**First embodiment: using CDM in the time domain only**

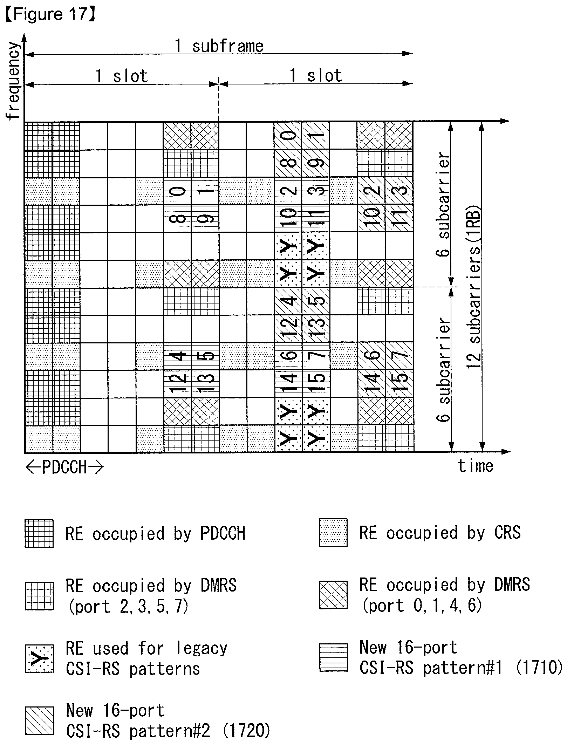

FIG. 17 illustrates one example of a 16-port CSI-RS pattern in a normal CP according to the present invention.

The CSI-RS pattern used in the present invention takes the form of a resource region (including one or more REs) to which a CSI-RS may be transmitted, where the CSI-RS pattern may be set differently for each port.

Also, the CSI-RS pattern may be expressed as CSI-RS resource.

In FIG. 17, 1710 and 1720 represent CSI-RS pattern (or CSI-RS resource) for the case of 16-ports.

Also, differently from the legacy CSI-RS pattern, the CSI-RS pattern (including 12 and 16 port) according to the present invention will be called collectively a 'new pattern' for the sake of convenience.

To compose a 16-port CSI-RS pattern of FIG. 17, at least one of the following characteristic elements ((1) to (5)) may be applied.

(1) A new pattern is made by combining part of legacy 1, 2, 4, or 8 port CSI-RS pattern.
Since the first embodiment employs a CDM length of 4 for FDM and time domain, the new pattern requires 4 OFDM symbols to compose one, where FIG. 17 gives one example.
In the case of FIG. 17, two legacy 8-port CSI-RS patterns are combined together to form one 16-port CSI-RS pattern.
In this manner, in case the aforementioned combination is limited to legacy patterns, legacy impact may be minimized by configuring a specific ZP CSI-RS resource(s) supported by the current 3GPP standard for the legacy UEs.
(2) CDM (Code-Division Multiplexing) may be applied to the CSI-RS port within the new pattern by multiplying the corresponding CSI-RS ports by the weight vector shown in the mathematical equation 13 below.

【Eq. 13】

$$\mathbf{W}_0 = [1,1,1,1], \mathbf{W}_1 = [1,-1,1,-1], \mathbf{W}_2 = [1,1,-1,-1], \mathbf{W}_3 = [1,-1,-1,1]$$

In other words, in the example of the new 16-port CSI-RS pattern 1 shown in FIG. 17, a total of 16-ports may be configured by multiplying each of the 4 FDM CSI-RS port groups denoted as {0,1,2,3}, {4,5,6,7}, {8,9,10,11}, and {12,13,14,15} by the weight vector shown in Eq. 13.
In this manner, the advantage of using the CDM of length 4 in the time domain is that power loss due to the 6dB power boosting restriction described above may be compensated.
More specifically, although each CSI-RS port may operate by using 1/16 of the original power, in case the method according to the first embodiment is employed, 6dB may be preserved from FDM, and another 6dB from CDM, by which the CSI-RS port becomes capable of using full power.
(3) Rules for CSI-RS port numbering within a new pattern

As shown in FIG. 17, first, port 0, 1, 2, and 3 (in fact, it may be port 15, 16, 17, and 18. Therefore, the start point of port numbering may not be 0, but it may start from 15) are mapped to the REs corresponding to the lowest (or highest) subcarrier index.

In this case, the lowest subcarrier index is k=0, and in FIG. 17, the index k=0 may correspond to the RE located at the very bottom along the frequency axis. The order of CDM in (2) may follow the order of CDDM weight vector expression of Eq. 13, and according to how W0 to W4 are permutated, CSI-RS port numbering may be performed.

FIG. 17 illustrates an example of composing two new 16-port CSI-RS patterns over 40 REs specified in the current LTE specification (refer to FIG. 14).

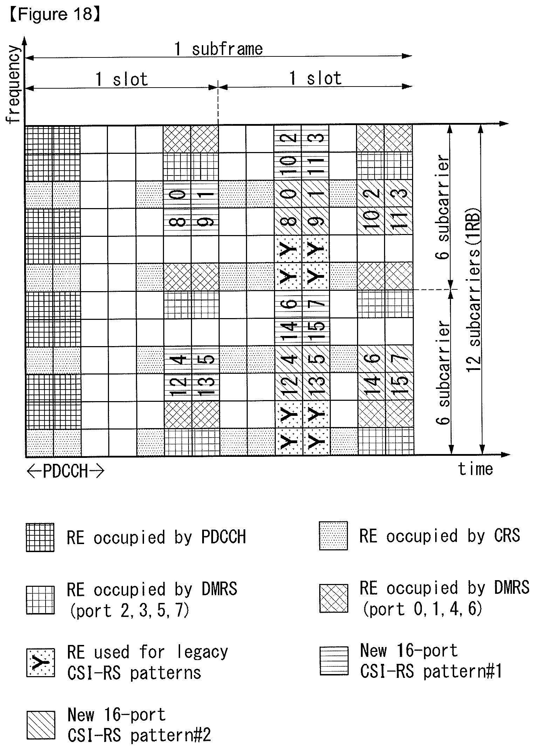

Also, the RE groups for legacy CSI-RS indicated by "Y" in FIG. 17 may be implemented by another embodiment of FIG. 18 in the same situation.

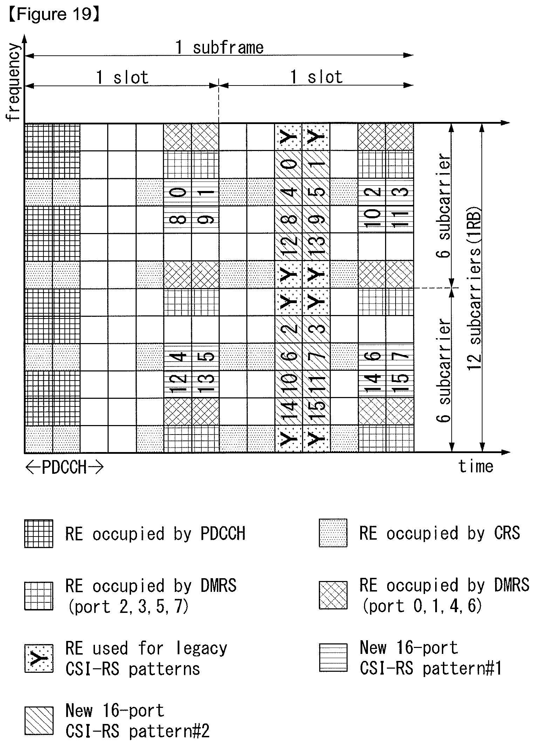

FIGs. 18 and 19 illustrate another example of a 16-port CSI-RS pattern in a normal CP according to the present invention.

In other words, as shown in FIGs. 18 and 19, two new patterns may be assigned to the positions of RE groups for legacy CSI-RS indicated by "Y".

The RE groups for legacy CSI-RS indicated by "Y" may be positioned at k = {2,3}, {8,9} or k = {4,5}, {10,11} in addition to the positions shown in FIGs. 18 and 19, and for both of the two cases, two new patterns may be composed as in FIGs. 17 to 19.

The advantage provided by the 16-port CSI-RS structure of FIG. 17 is that network flexibility may be improved in setting a legacy CSI-RS pattern in the same subframe.

For example, in case a specific cell/TP A transmits only "New 16-port CSI-RS pattern#1" as shown in FIG. 17, another cell/TP (or additionally the same cell/TP A) may selectively transmit one from among the legacy 1, 2, or 4 port CSI-RS pattern to the REs of unoccupied "New 12-port CSI-RS pattern#2".

This is so the CSI-RS patterns do not overlap with each other.

However, the options for the 16-port CSI-RS patterns are not limited to the example above, but various patterns may be additionally employed.

In other words, at least one of the options shown in FIG. 18 and 19 including the option shown in FIG. 17 may be defined/configured.

In this case, a network or eNB may configure the UE through higher-layer signaling about which pattern the UE has to assume to perform CSI-RS reception and CSI derivation.

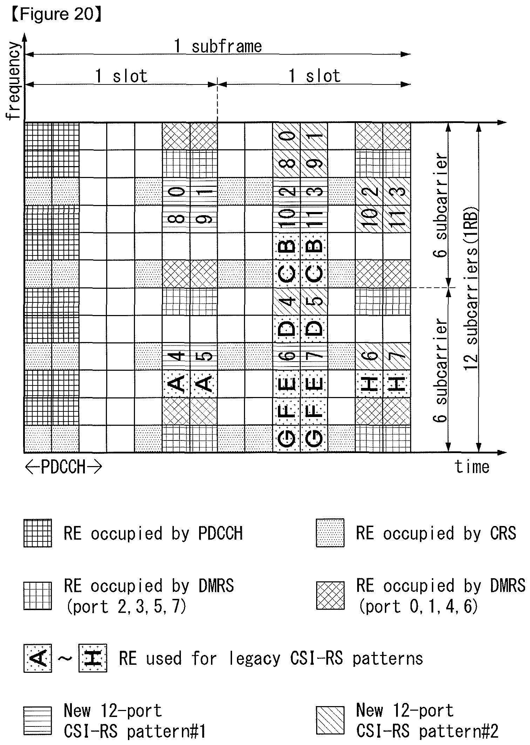

FIG. 20 illustrates one example of a 12-port CSI-RS pattern in a normal CP according to the present invention.

FIG. 20 is an example of CSI-RS port structure using CDM (Code Division Multiplexing), and similarly to the 16-port CSI-RS structure, the 12-port CSI-RS pattern may create a new pattern so that portions of legacy 1, 2, 4, or 8 port CSI-RS pattern are combined together.

Since the first embodiment considers CDM of length 4 for FDM and time domain, 4 OFDM symbols are required to compose one new pattern.

The example of FIG. 20 may be interpreted as a combination of six 2-port CSI-RS patterns or a combination of two 4-ports and two 2-port CSI-RS patterns.

Thus, the advantage of using CDM of length 4 as the time domain is that power loss due to 6 dB power boosting restriction may be compensated.

More specifically, although each CSI-RS port may operate by using 1/12 of the original power, in case the method according to the first embodiment is employed, 4.77dB may be preserved from FDM, and 6dB from CDM, by which the CSI-RS port becomes capable of using full power.

The CDM-based method may be easily extended by using the method described in the step (2) of the first embodiment (which is the example of 16-port).

Also, the port numbering method may also be easily extended by using the method described in the step (3) of the first embodiment.

FIG. 20 illustrates an example of composing two new patterns over 40 REs specified in the current LTE specification (refer to FIG. 14), which may be easily extended according to the position of a legacy CSI-RS indicated by "A" to "H" and the position of the RE composing the new pattern as shown in the 16-port example.

In other words, according to the principles for composing a new pattern using FDM of length 3 and CDM of length 4, the example above may be easily extended to composing various CSI-RS patterns.

Up to this point, composition of new patterns in the case of a normal CP (Cyclic Prefix) has been described; in what follows, new pattern composition in the case of an extended CP will be described.

Principles for new pattern composition in the extended CP may be derived similarly to the case of the normal CP described above.

In other words, the port numbering rules described in the first embodiment may be applied in the same manner to the case of extended CP.

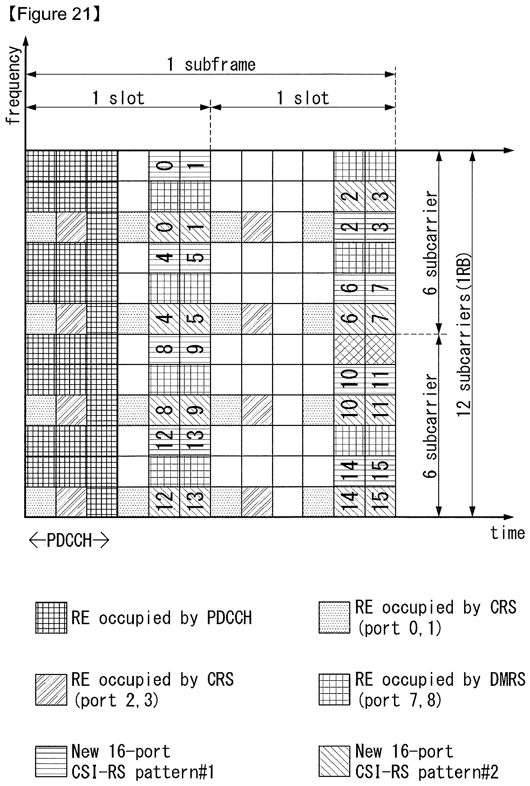

FIG. 21 illustrates one example of a 16-port CSI-RS configuration in an extended CP according to the present invention.

FIG. 21 may be interpreted as an example in which two 8-port CSI-RSs are combined.

In this case, for the convenience of description, an expression of port 0 or 1 is used, which may be alternatively expressed as CSI-RS port 15 or 16 to distinguish it from a different type of RS such as CRS and miscellaneous, UE-specific RS.

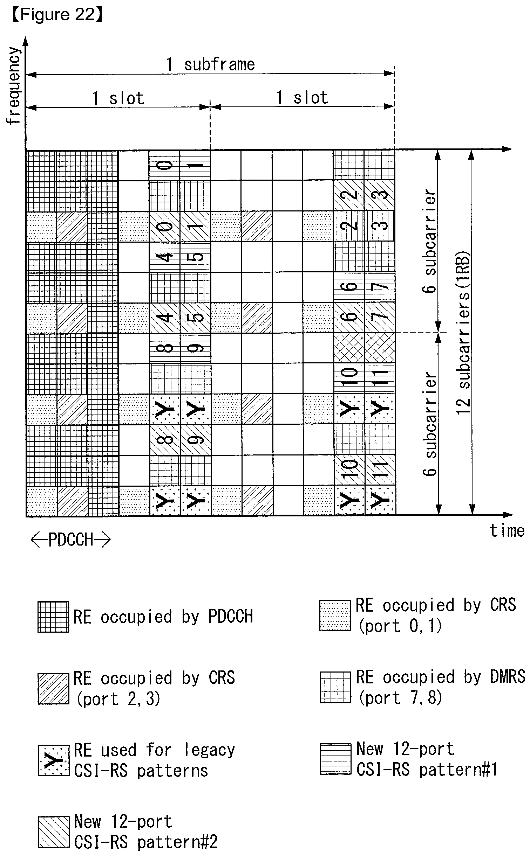

FIG. 22 illustrates one example of a 12-port CSI-RS configuration in an extended CP according to the present invention.

In the case of 12-port, too, the new pattern composition may be extended similarly to the case of the normal CP.

Differently from the case of 16-port, since the number of REs required for a legacy CSI-RS is 32 (refer to FIG. 15), up to two new patterns may be applied, and for the remaining 8 REs, REs may be (re)used for the legacy CSI-RS.

Through the new pattern composition may vary according to the change of positions of REs indicated by "Y" in FIG. 22, according to the principles for composing a new pattern using FDM of length 3 and CDM of length 4, the new pattern composition may be easily extended for implementing more various patterns.

**Second embodiment: using CDM across the time and frequency domains**

The second embodiment proposes a method for applying CDM of length 4 to the time and frequency domain so that CDM of length 2 is assigned for each domain.

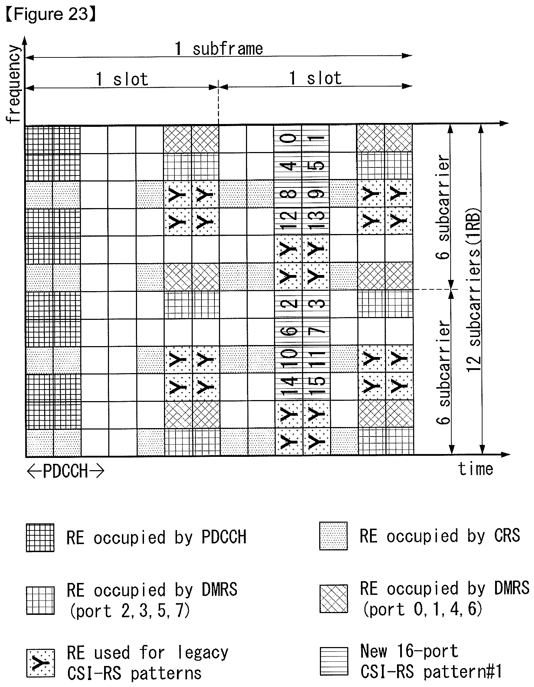

FIG. 23 illustrates another example of a 16-port CSI-RS pattern in a normal CP according to the present invention.

The CDM method employed in FIG. 23 configures a total of 16-ports by multiplying the CSI-RS port groups denoted as {0,1,2,3}, {4,5,6,7}, {8,9,10,11}, and {12,13,14,15} by the weight vector of Eq. 13.

To describe the example by using the group denoted as {0, 1, 2, 3}, a new CSI-RS 16-port is set up by configuring CDM of length 2 for two consecutive OFDM symbols and CDM of length 2 for two small groups (or sub-groups) (which correspond to {0,1} and {2,3} in the example of {0, 1, 2, 3}) frequency division multiplexed according to the configuration of the legacy CSI-RS port.

For the convenience of description, the method illustrated in FIG. 23 is defined as 'method 1' of the second embodiment.

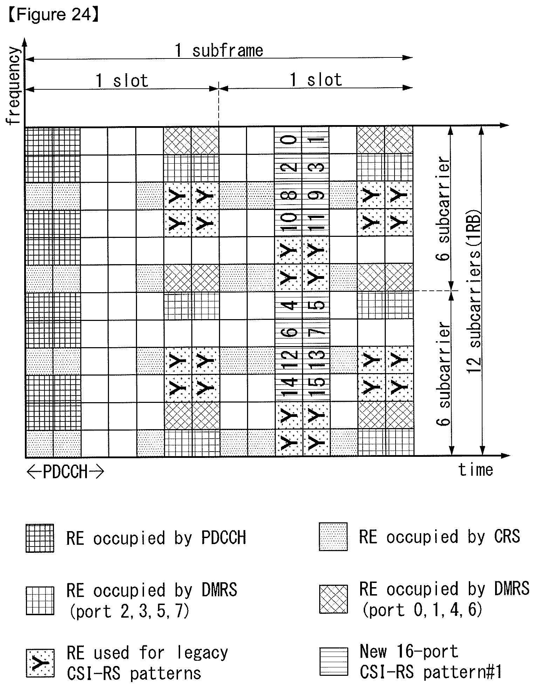

FIG. 24 illustrates a yet another example of a 16-port CSI-RS pattern in a normal CP according to the present invention.

In the case of FIG. 24, differently from FIG. 23, the group performing CDM of length 4 does not follow the existing legacy CSI-RS scheme, but configures CDM of length 4 by selecting two consecutive OFDM symbols and two consecutive subcarriers.

To describe in more detail with reference to FIG. 24, a total of 16-ports are configured by multiplying the CSI-RS port groups denoted as {0,1,2,3}, {4,5,6,7}, {8,9,10,11}, {12,13,14,15} (or {15,16,17,18}, {19,20,21,22}, {23,24,25,26}, {27,28,29,30}) by the weight vector of Eq. 13.

To describe the example by using the group denoted as {0, 1, 2, 3}, a new CSI-RS 16-port is set up by configuring CDM of length 4 to be (1) CDM of length 2 for two consecutive OFDM symbols and (2) CDM of length 2 for two consecutive subcarriers.

The method illustrated in FIG. 24 is defined as 'method 2' of the second embodiment to distinguish it from the method of FIG. 23.

Method 1 and 2 may be considered to be the same in a sense that both of them are capable of using full power; difference between the two methods is that the number of available new 16-port CSI-RS pattern is 1 for the case of method 2.

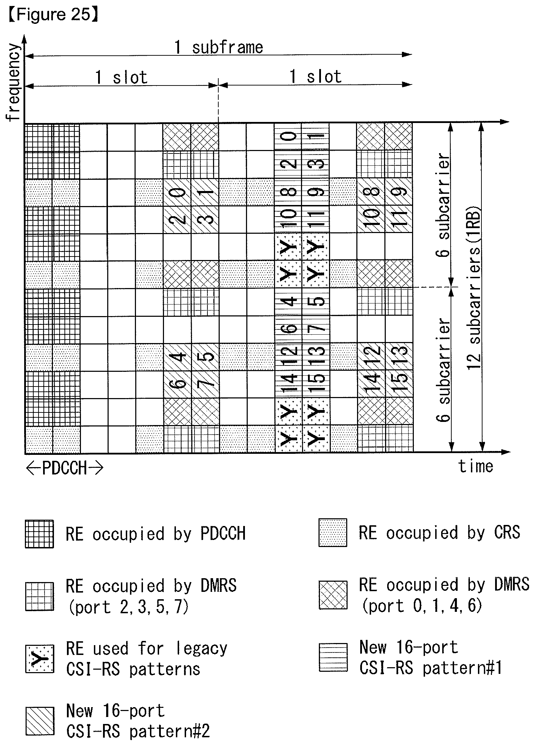

As shown in FIG. 25, counting the case in which full power transmission is not employed, new 16-port CSI-RS pattern 2 may be added.

FIG. 25 illustrates a still another example of a 16-port CSI-RS pattern in a normal CP according to the present invention.

In other words, the new 16-port CSI-RS pattern 1 is a pattern for performing full power transmission while the new 16-port CSI-RS pattern 2 is a pattern for performing power transmission with a 3 dB loss.

Therefore, when considering the new 16-port CSI-RS pattern, the eNB may assign a higher priority to the new 16-port CSI-RS pattern 1 than the new 16-port CSI-RS pattern 2.

And when composing the new 16-port CSI-RS pattern 2, the eNB may apply various configurations by taking into account the REs corresponding to the legacy CSI-RS indicated by "Y".

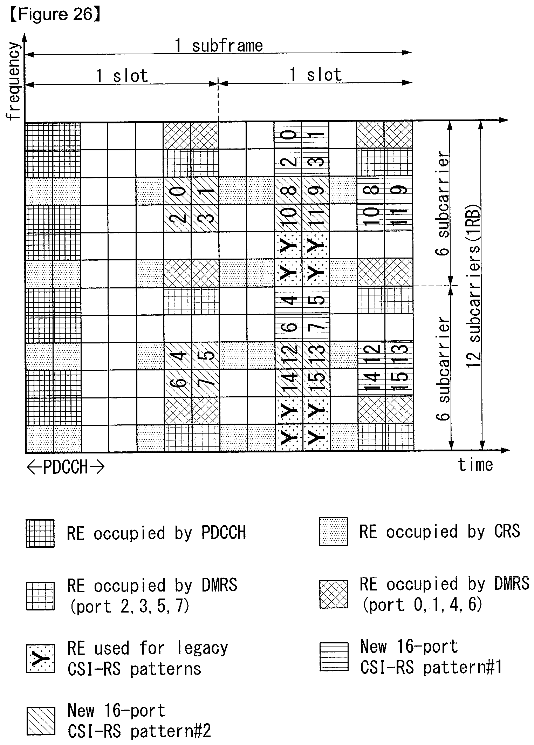

FIG. 26 illustrates a further example of a 16-port CSI-RS pattern in a normal CP according to the present invention.

FIG. 26 shows a pattern composition in which both of the new pattern 1 and 2 perform transmission with a 3 dB loss.

Therefore, priorities of the two patterns considered by the eNB are the same.

Also, when the new pattern 2 is configured, the eNB may apply various configurations by taking into account the REs corresponding to the legacy CSI-RS indicated by "Y".

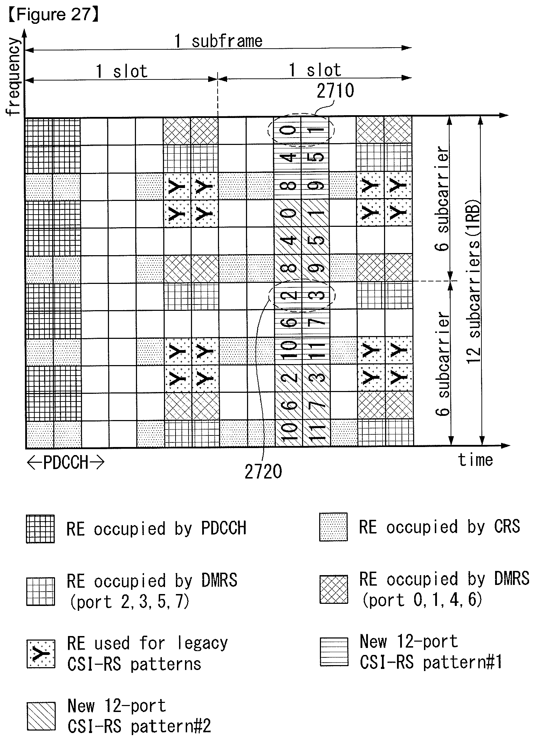

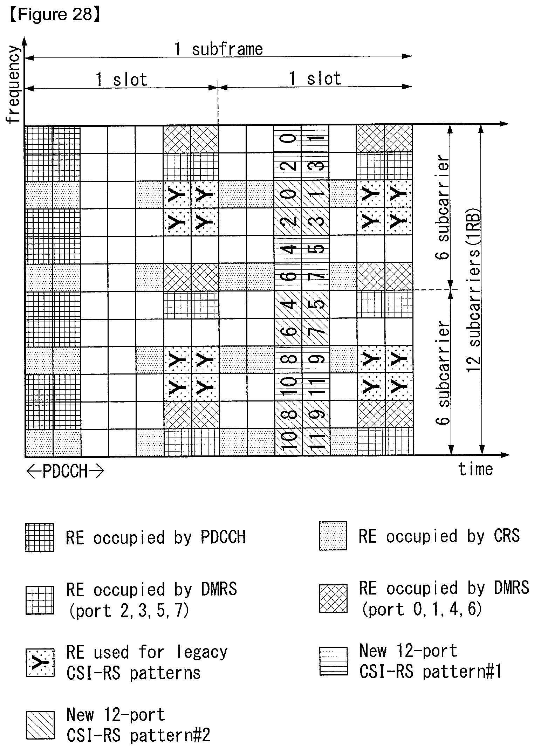

FIGs. 27 and 28 illustrate another example of a 12-port CSI-RS pattern in a normal CP according to the present invention.

The method 1 and 2 described above may also be applied to FIGs. 27 and 28 respectively.

In other words, in the same way as in the method 1, a new CSI-RS 12-port may be set up by configuring CDM of length 2 for two consecutive OFDM symbols and configuring CDM of length 2 for two small groups (or sub-groups) frequency division multiplexed according to the configuration of the legacy CSI-RS port.

At this time, the two small groups frequency division multiplexed according to the legacy CSI-RS port configuration correspond to (0, 1) and (2, 3) in FIG. 16b (4 CSI-RS ports), and the two small groups are separated by 6 subcarrier interval.

To describe in more detail with reference to FIG. 27, a total of 12-ports are configured by multiplying CSI-RS port groups indicated by {0, 1, 2, 3}, (4, 5,6 ,7), and {8, 9, 10, 11} (or {15, 16, 17, 18}, {19, 20, 21, 22}, and {23, 24, 25, 26}) by the weight vector of Eq. 13.

To describe the example by using the group denoted as {0, 1, 2, 3}, a new CSI-RS 12-port is set up by configuring CDM of length 4 to be (1) CDM of length 2 for two consecutive OFDM symbols 2910, 2920 and (2) CDM of length 2 for two consecutive small groups (or sub-groups 2710, 2720) (which correspond to {0,1} and {2,3} in the example of {0, 1, 2, 3}) frequency division multiplexed according to the configuration for the legacy CSI-RS port.

Also, in the case of FIG. 27, in the same way as in the method 2, CDM of length 4 is configured by selecting two consecutive OFDM symbols and two consecutive subcarriers.

Different from the 16-port CSI-RS pattern configuration described above, there may be two patterns which may be configured for full power transmission.

Also, the 12-port CSI-RS pattern configuration may be applied in various ways according to the positions of REs corresponding to the legacy CSI-RS indicated by "Y", but the principles for configuring a new pattern described above may be applied in the same manner.

The remaining process and characteristics (such as port numbering rule) except for the method for applying CDM of length 4 in the second embodiment follow what are described in the first embodiment described above.

Up to this point, the case in which the second embodiment is applied to a normal CP has been described; in what follows, the case in which the second embodiment is applied to an extended CP will be described.

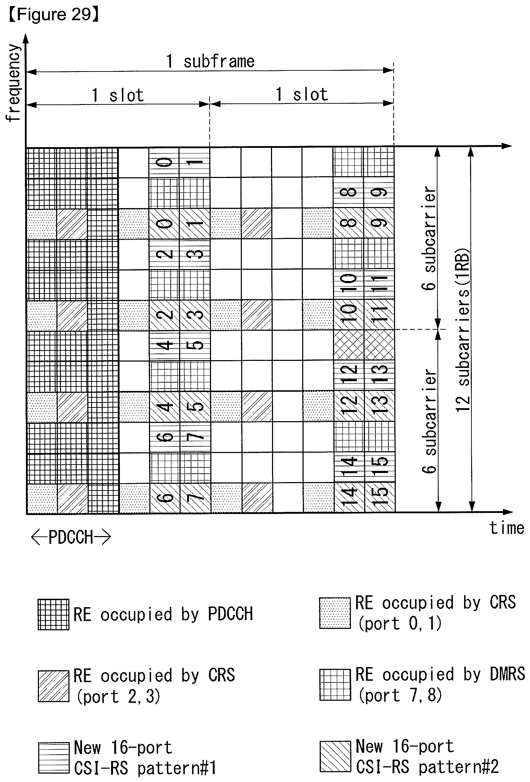

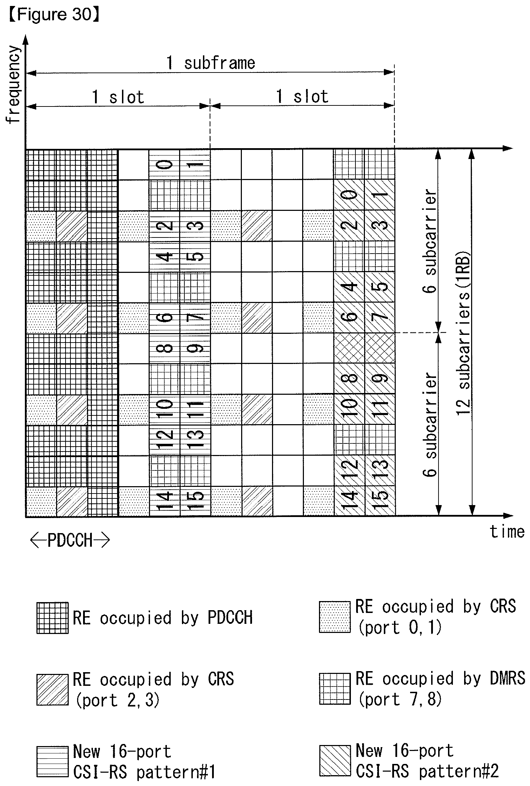

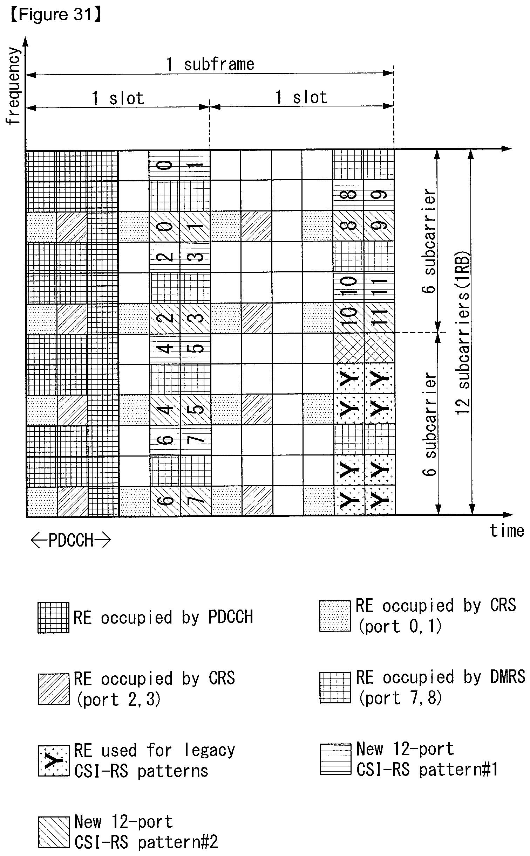

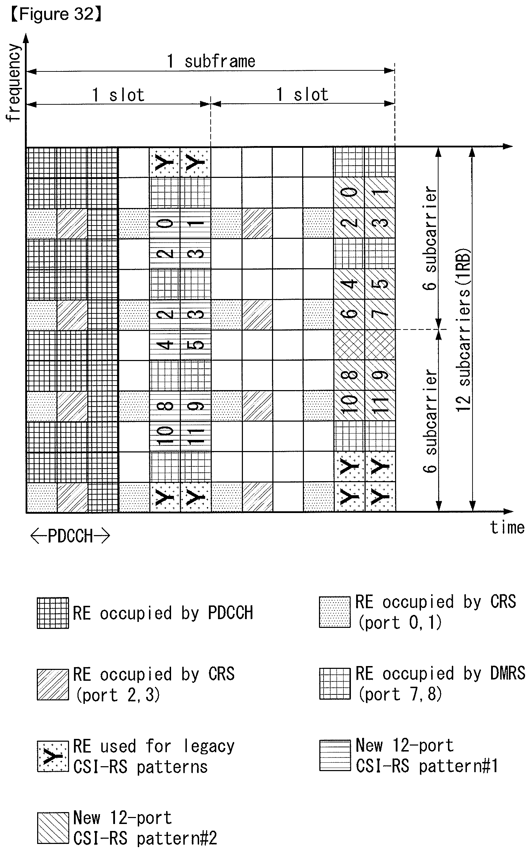

FIGs. 29 and 30 illustrate another example of a 16-port CSI-RS pattern in an extended CP according to the present invention; and FIGs. 31 and 32 illustrate a yet another example of a 16-port CSI-RS pattern in an extended CP according to the present invention.

In the case of extended CP, if the positions of REs corresponding to CSI-RS of OFDM symbol 4, 5 and two new patterns are taken into consideration, the method 1 of the second embodiment may be applied.

In FIG. 29, the configuration corresponding to (OFDM) symbol 4 and 5 corresponds to the case where the subcarrier separation distance within a group performing CDM is '1' while the configuration corresponding to OFDM symbol 8 and 9 corresponds to the case where the subcarrier separation distance within a group performing CDM is '0'.

From the viewpoint of performance, a pattern which does not have a separation distance in the frequency domain in which CDM is performed may provide a better performance.

Therefore, the UE may put a higher priority on the new pattern 2 when using a configuration as shown in FIG. 30.

Although the 12-port CSI-RS pattern configuration may be applied in various ways according to the positions of REs corresponding to the legacy CSI-RS indicated by "Y", the principles for configuring a new pattern described above may be applied in the same manner as in the method 1 of the second embodiment.

FIG. 32 illustrates one example of new 12-port CSI-RS pattern configuration using the method 2 of the second embodiment.

Comparing FIG. 31 with FIG. 32, the example of FIG. 32 which shows no subcarrier separation distance within a group performing CDM may exhibit a little more excellent performance.

For the new CSI-RS pattern configuration described above, too, the remaining process and characteristics except for the method for applying CDM of length 4 follow what are described in the first embodiment.

**Third embodiment: method for combining the first and the second embodiment**

The third embodiment proposes a method for combining the first and the second embodiment for configuring a new pattern using full power more often.

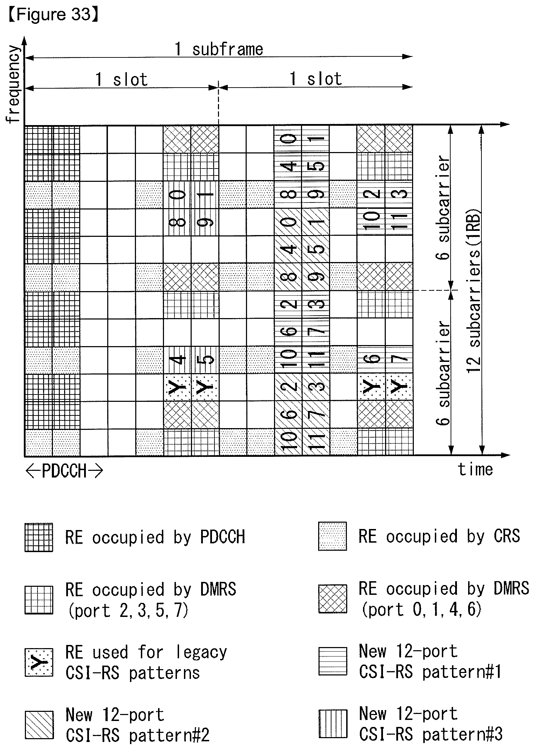

First, FIG. 33 which illustrates a 12-port CSI-RS pattern will be described.

FIG. 33 illustrates one example of a 12-port CSI-RS pattern in a normal CP according to the present invention.

New pattern 1 and 2 correspond to the case where CDM is applied using the principles of the method 1 of the second embodiment while new pattern 3 corresponds to the case where CDM is applied using the principles of the first embodiment.

In this case, while the number of new 12-port CSI-RS patterns of the first and the second embodiment is 2, the number of new 12-port CSI-RS patterns of the third embodiment may be 3; also, it is advantageous in that the three new patterns all utilize full power transmission.

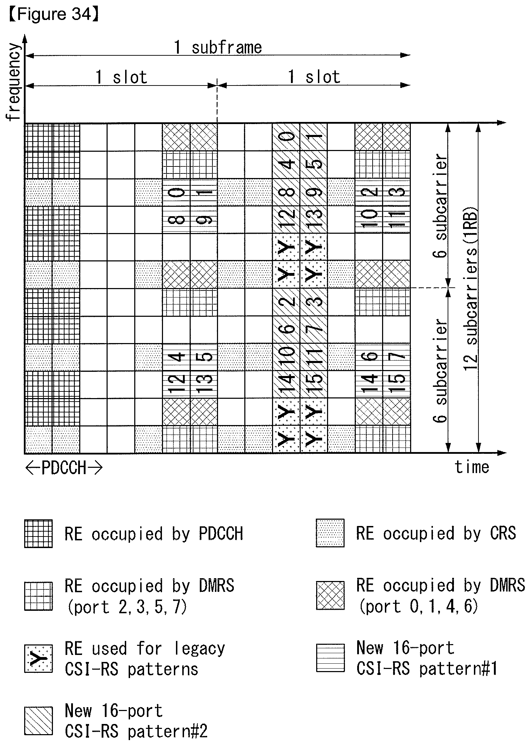

FIG. 34 which considers 16-port CSI-RS pattern also shows a new CSI-RS pattern configured according to the same principle.

In other words, FIGs. 34 to 36 represent one example of a 16-port CSI-RS pattern in a normal CP according to the present invention.

FIGs. 33 and 34 apply CDM to REs having a difference of up to 8 OFDM symbols in the time domain.

In this way, in case the spacing between OFDM symbols is large, performance degradation due to phase drift may occur.

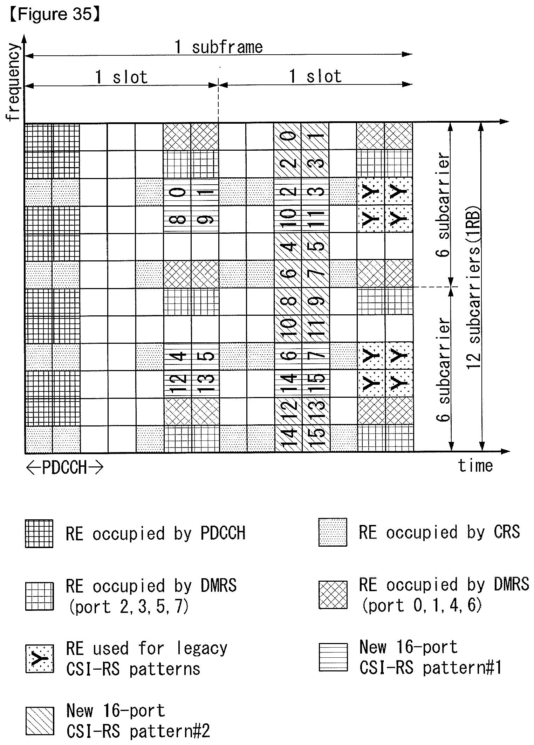

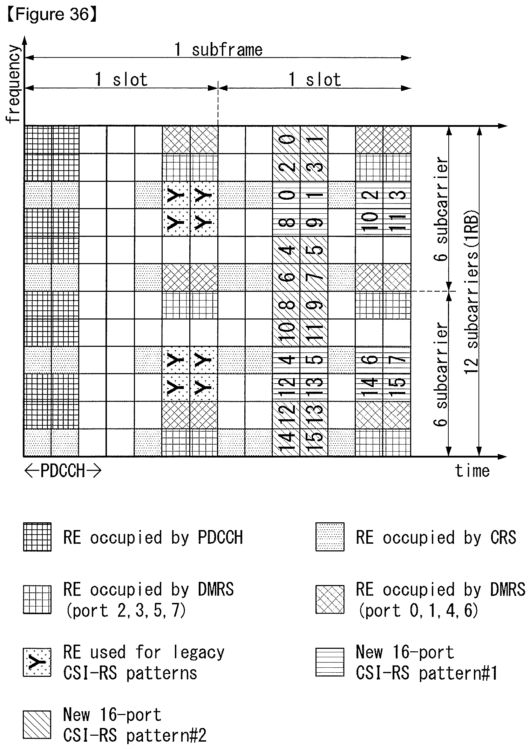

Therefore, FIGs. 35 and 36 illustrate a case in which CDM of length 4 in the time domain shows 4 or 5 OFDM symbol difference to solve the phase drift problem of FIGs. 33 and 34.

Also, in the case of new pattern 2, too, since there is no subcarrier separation among REs performing CDM 4 (time and frequency domain) according to the second embodiment, a bit more excellent performance may be expected.

Also, the third embodiment allows CSI-RS to utilize full power transmission.

As shown in the figures of the third embodiment, the port number for new pattern 1 may be numbered as {0,1,2,3}, {8,9,10,11}, {4,5,6,7}, {12,13,14,15} or {0,1,2,3}, {4,5,6,7}, {8,9,10,11}, {12,13,14,15} in terms of groups performing CDM of length 4. In what follows, detailed descriptions about port numbering follow the method according to the first embodiment.

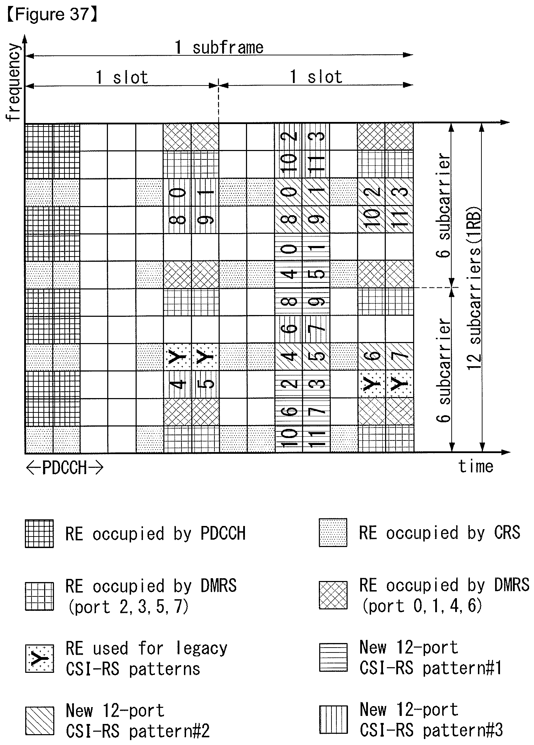

FIG. 37 illustrates another example of a 12-port CSI-RS pattern configuration in a normal CP according to the present invention.

FIG. 37 illustrates one example in which CDM is applied among REs having a smaller OFDM symbol interval in the time domain.

As shown in FIG. 37, new pattern 1 applies the method 1 of the second embodiment, and new pattern 2 and 3 represent new CSI-Rs patterns configured by applying the method of the first embodiment.

In FIG. 37, the positions of REs for legacy systems indicated by "Y" may be determined in various ways, and CSI-RS pattern may be configured by extending and applying the principle according to the present invention.

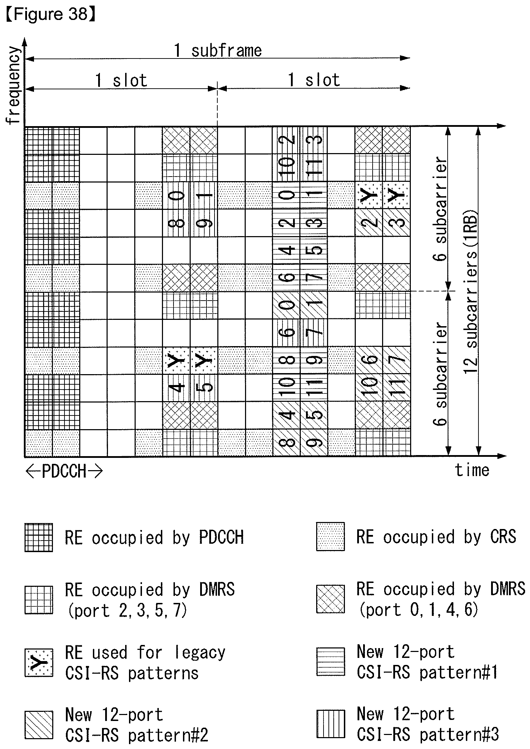

FIG. 38 illustrates a yet another example of a 12-port CSI-RS pattern configuration in a normal CP according to the present invention.

As shown in FIG. 38, new pattern 1 applies the method 2 of the second embodiment, and new pattern 2 and 3 correspond to new CSI-RS patterns configured by applying the method of the first embodiment.

Since the method 2 of the second embodiment is performed among consecutive subcarriers even when CDM is performed in the frequency domain, better performance may be expected compared with the method of FIG. 37.

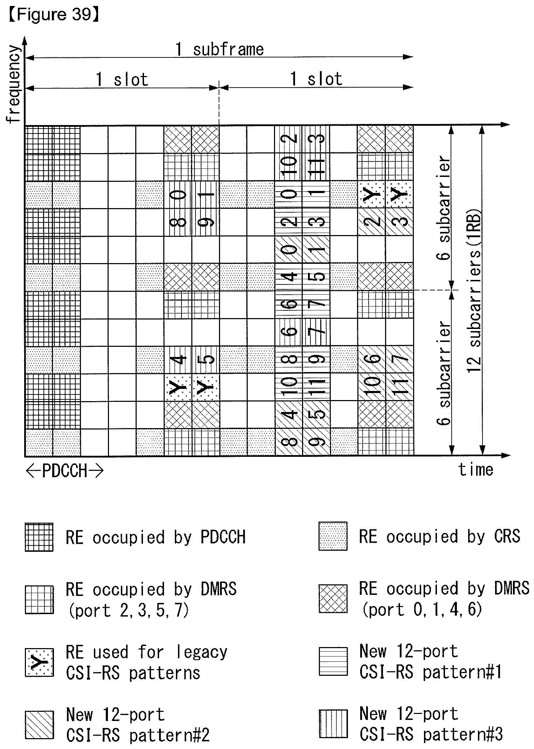

FIGs. 39 to 41 illustrate a still another example of a 12-port CSI-RS pattern configuration in a normal CP according to the present invention.

As shown in FIGs. 39 to 41, the method 2 of the second embodiment has been applied to new pattern 1, and new pattern 2 and 3 are new CSI-RS patterns configured by applying the method of the first embodiment.

Section 6.4 of the 3GPP TS36.211 states that each symbol is mapped to an RE when SFBC (Space Frequency Block Coding) is performed, and symbols are allowed to be separated from each other by up to 2 subcarriers within one OFDM symbol.

The aforementioned statement has been introduced since such restriction brings performance degradation in proportion to the interval between subcarriers performing SFBC.

The present invention proposes that in case CDM (Code Division Multiplexing) of length 4 is applied only in the time domain, similarly to the configuration rule above and as shown in FIGs. 39 to 41, the subcarrier interval of 4 REs comprising CDM of length 4 be 2 at maximum.

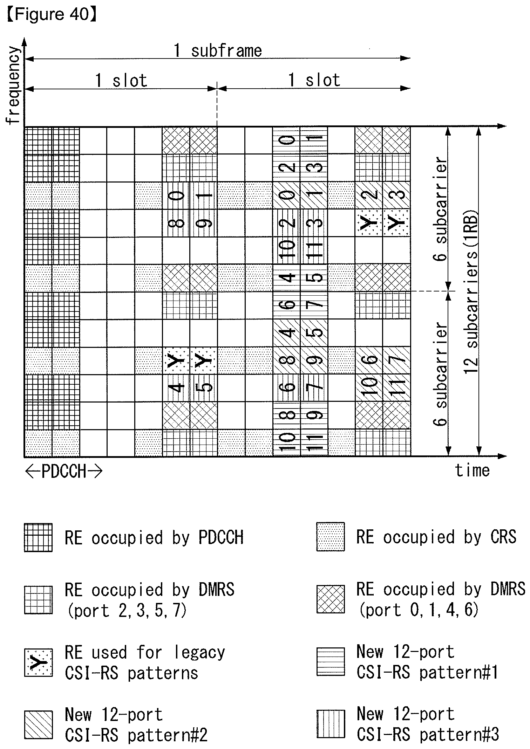

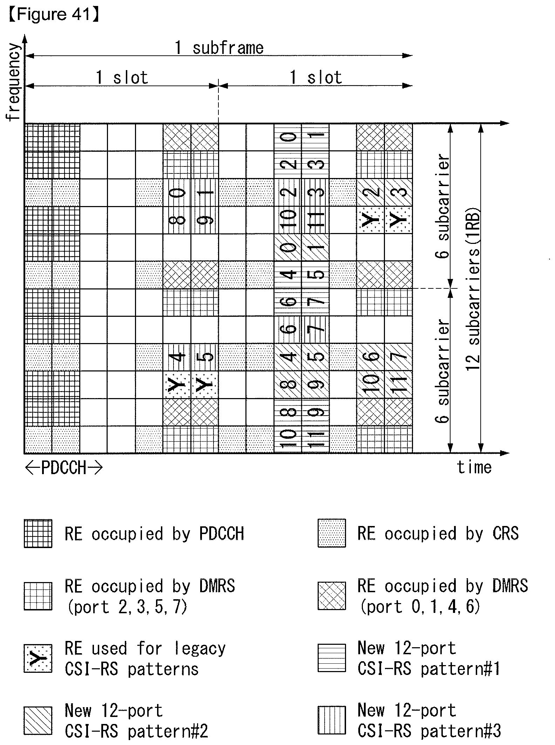

FIG. 39 illustrates one example where the maximum interval between subcarriers of four REs comprising CDM of length 4 is 2, and FIGs. 40 and 41 illustrate one example where the maximum interval between subcarriers of 4 REs comprising CDM of length 4 is 1.

In particular, FIG. 41 illustrates a configuration in which only one CDM 4 pair among three CDM 4 pairs forming 12-port CSI-RS in each of the new pattern 2 and 3 is configured to have 1 subcarrier interval.

Therefore, it is expected that FIG. 41 among FIGs. 39 to 41 exhibit the best performance.

As another example, if DCI related to the PDSCH uses C-RNTI or semi-persistent C-RNTI, and time diversity is used according to the TS 36.211 6.3.4.3 section, REs in the OFDM symbols considered by the UE to include CSI-RS are mapped only when the following constraints are met:

- The even-numbered resource elements of the OFDM symbol within each resource block allocated for transmission,

- Complex-valued symbols $y^{(p)}(i)$, and $y^{(p)}(i+1)$, where $i$ is an even number, may be mapped to the resource element (k, l) and (k+n, l), n<3 within the same OFDM symbol.

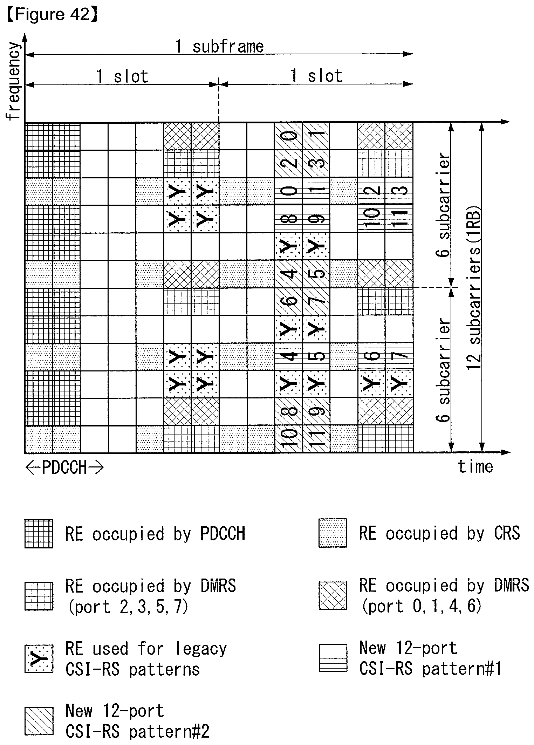

FIG. 42 illustrates a further example of a 12-port CSI-RS pattern configuration in a normal CP according to the present invention.

As shown in FIG. 42, new pattern is characterized by a subset of the 16-port CSI-RS pattern shown in FIG. 36.

Although the number of patterns that may be realized by the configuration of the new pattern of FIG. 42 is limited to 2, 12-port and 16-port may be configured adaptively according to the number of ports within a given configuration.

One example of composing a 12-port CSI-RS pattern from a 16-port CSI-RS pattern is to select lower or upper 12 ports from given 16-ports in terms of port number.

Up to this point, a method for configuring a 12-port and 16-port CSI-RS pattern using CDM of length 4 has been described.

As described above, in case CDM of length 4 is used, full power transmission is possible, but a strict restriction may be applied for pattern configuration.

Therefore, in what follows, a method for configuring a new pattern by using the existing CDM of length 2 will be described through a fourth embodiment.

First, CDM of length 2 is configured using weighting coefficients of $\mathbf{W}_0$ = [1,1], $\mathbf{W}_1$ = [1,-1] for two consecutive OFDM symbols of the same subcarrier

When the aforementioned configuration is used, CDM of length 2 may be applied without modification to the new patterns described in the first to third embodiment.

In this case, power required for transmission of CSI-RS may not be sufficiently provided, but more various patterns may be configured instead.

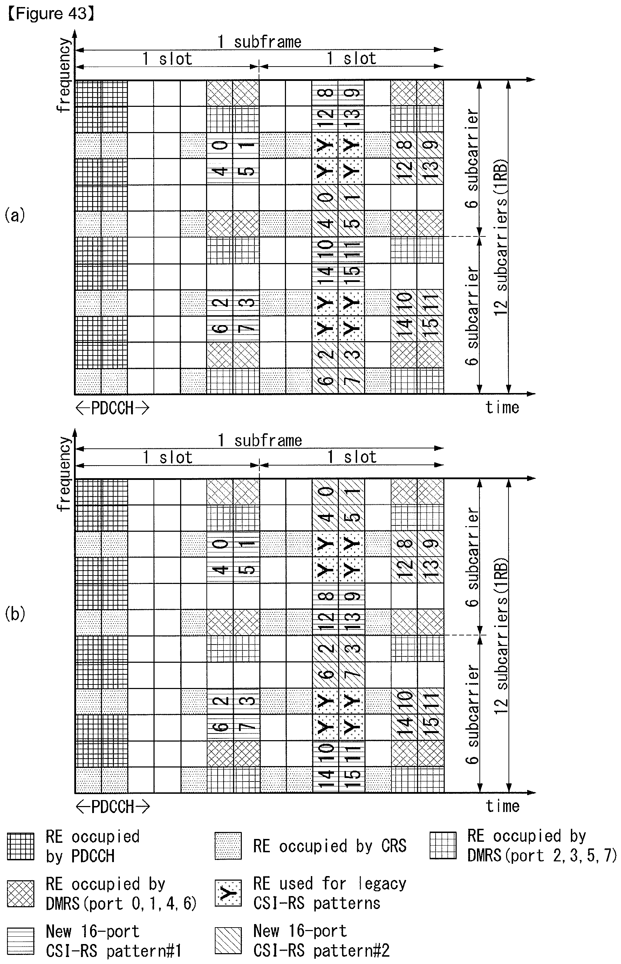

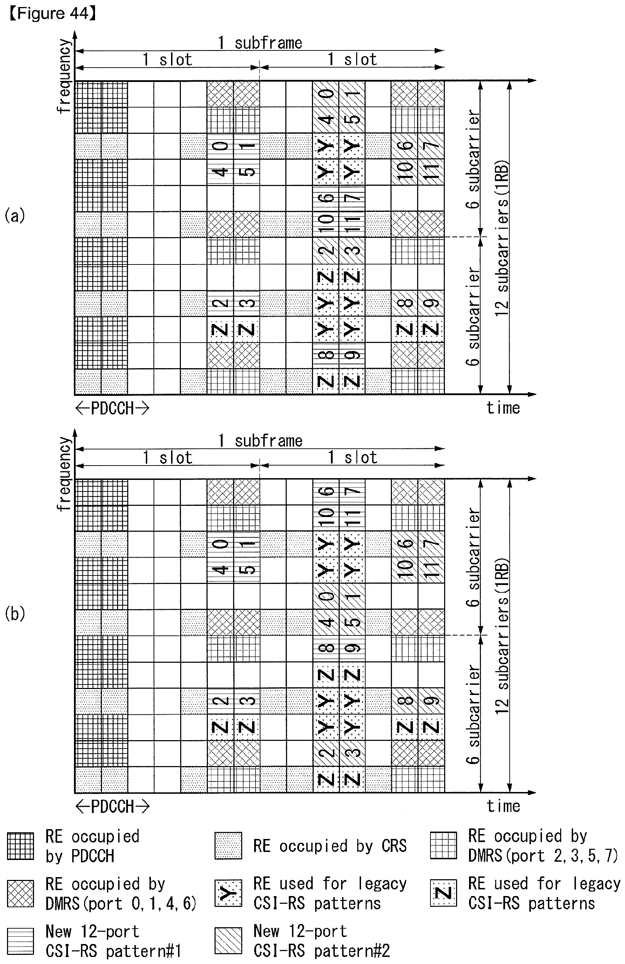

FIGs. 43 and 44 illustrate examples of 12-port and 16-port CSI-RS pattern configurations in a normal CP according to the present invention.

More specifically, FIGs. 43a and 43b illustrate examples of 12-port CSI-RS pattern configuration in a normal CP while FIGs. 44a and 44b illustrate examples of 16-port CSI-RS pattern configuration in a normal CP.

As shown in FIGs. 44a and 44b, 16-port CSI-RS pattern is aggregated with two existing 8-port CSI-RS patterns.

FIGs. 44a and 44b illustrate the case where the 8-port CSI-RS is shifted by 2 subcarriers from the start point of the two 8-port CSI-RS groups (for example, 0-th port or 15-th port according to the specification), and as shown in FIGs. 43a and 43b, two 16-port CSI-RS patterns may be configured.

In other words, the '0'-th port, the start point of the first 8-port CSI-RS group and the '8'-th port, the start point of the second 8-port CSI-RS group are shifted from each other by 2 subcarriers.

FIGs. 44a and 44b illustrate 12-port CSI-RS pattern, which is similar to the 16-port CSI-RS pattern configuration of FIGs. 43a and 43b.

As shown in FIGs. 44a and 44b, although two 12-port CSI-RS configuration may be applied, a total of four 12-port CSI-RS patterns may be configured according to the position of CSI-RS indicated by "Z".

For example, as shown in FIG. 44b, if the REs corresponding to (2,3) and (8,9) and the REs indicated by "Z" exchange their positions in the new pattern #1, two new patterns may be obtained.

As described above, in case existing legacy CSI-RS configurations are aggregated, the eNB explicitly informs the UE of the position of CSI-RS or of the number of ports for the aggregated CSI-RSs and "0"-th port (or "15"-th port) through RRC signaling.

For example, if it is assumed that the 16-port CSI-RS pattern is composed of two existing 8-port CSI-RS patterns, the eNB may inform the UE of the starting port ("0"-th port) number of the two 8-port CSI-RS patterns through RRC signaling.

In case two 4-port CSI-RS patterns and two 2-port CSI-RS patterns comprise 12-ports, the eNB may inform the UE of the "0"-th port of the two 4-port CSI-RS patterns and the "0"-th port of the two 2-port CSI-RS patterns used for the CSI-RS configuration through RRC signaling.

Similarly, in case the CSI-RS patterns including FIGs. 43 and 44 are fixed to the 3GPP specification, the eNB may inform the UE of the type of the CSI-RS pattern through RRC signaling.

Additionally, the eNB may also inform the UE of the information about CDM length together with the type of the CSI-RS pattern through the RRC signaling.

At this time, the information about CDM length represents CDM of length 2 or CDM of length 4.

Also, the information about CDM length may be called or expressed as information about CDM type.

### Fourth embodiment: CSI-RS aggregation for CDM-4

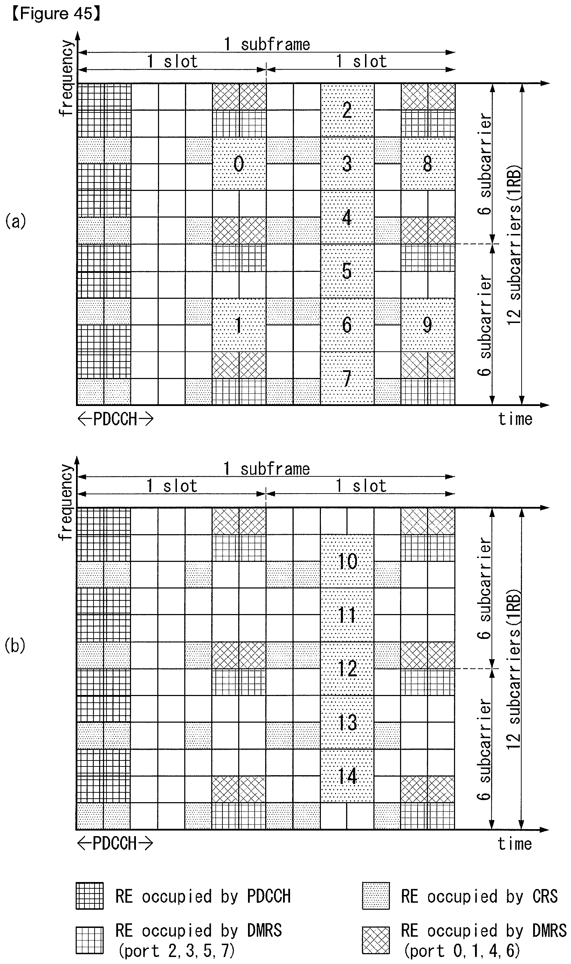

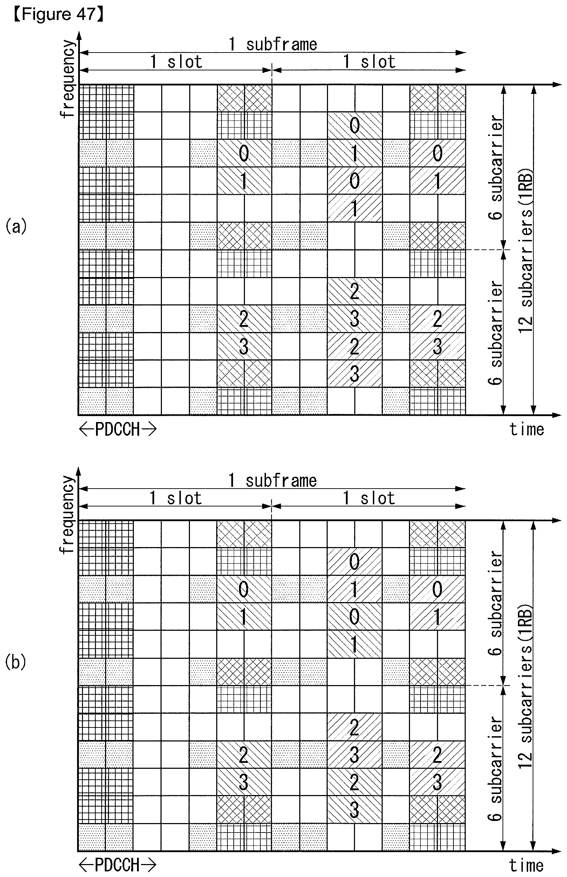

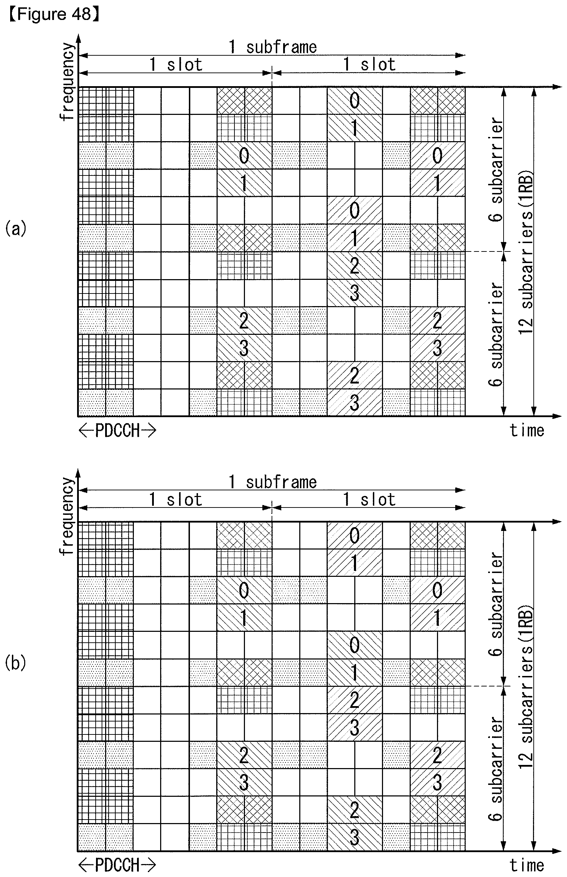

FIGs. 45 to 48 illustrate examples of a resource pool in 4-port CSI-RS units for CDM of length 4 according to the present invention.

In other words, FIG. 45 illustrates a resource pool in 4-port (CSI-RS) units for CDM of length 4 among the first to third embodiments described above.

More specifically, FIGs. 45a and 45b represent a resource pool of the second embodiment (to which CDM of length 4 is applied in the time and frequency domain), and a total of 15 resource pools may be expressed.

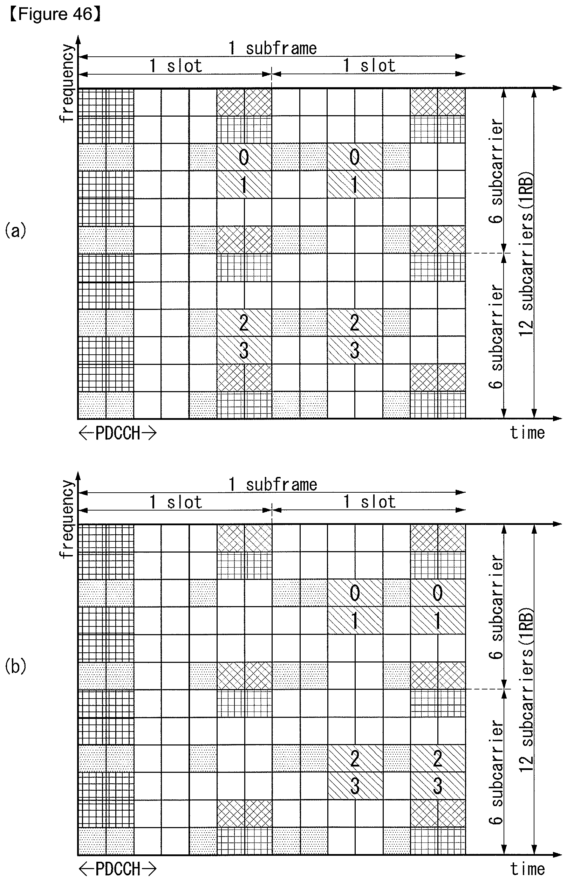

FIGs. 46a, 46b, 47a, 47b, 48a, and 48b represent a resource pool of the first embodiment (to which CDM of length 4 is applied only in the time domain) described above, and 40 resource pools exist.

Therefore, in the case of FIGs. 45 to 48, a total of 55 resource pools in 4-port units may exist.

Table 6 below summarizes the description above. In Table 6 below, ns represents the slot number.

Table 6 illustrates one example of CSI-RS configuration with respect to a normal CP mapped to (k', l').

【Table 6】

| | CSI reference signal configuration | Number of CSI reference signals configured 4 | | | CSI reference signal configuration | Number of CSI reference signals configured 4 | | |
|---|---|---|---|---|---|---|---|---|
| | | $(k',l')$ | $n_s \bmod 2$ | Type | | $(k',l')$ | $n_s \bmod 2$ | Type |
| Frame structure type 1 and 2 | 0 | (9, 5) | 0 | 0 | 32 | (8, 5) | 0 | 5 |
| | 1 | (3, 5) | 0 | 0 | 33 | (3, 5) | 0 | 5 |
| | 2 | (11, 2) | 1 | 0 | 34 | (2, 5) | 0 | 5 |
| | 3 | (9, 2) | 1 | 0 | 35 | (10, 2) | 1 | 6 |
| | 4 | (7, 2) | 1 | 0 | 36 | (9, 2) | 1 | 6 |
| | 5 | (5, 2) | 1 | 0 | 37 | (4, 2) | 1 | 6 |
| | 6 | (3, 2) | 1 | 0 | 38 | (3, 2) | 1 | 6 |
| | 7 | (1, 2) | 1 | 0 | 39 | (9, 5) | 0 | 7 |
| | 8 | (9, 5) | 1 | 0 | 40 | (8, 5) | 0 | 7 |
| | 9 | (3, 5) | 1 | 0 | 41 | (3, 5) | 0 | 7 |
| | 10 | (10, 2) | 1 | 0 | 42 | (2, 5) | 0 | 7 |
| | 11 | (8, 2) | 1 | 0 | 43 | (7, 2) | 1 | 8 |
| | 12 | (6, 2) | 1 | 0 | 44 | (6, 2) | 1 | 8 |
| | 13 | (4, 2) | 1 | 0 | 45 | (1, 2) | 1 | 8 |
| | 14 | (2, 2) | 1 | 0 | 46 | (0, 2) | 1 | 9 |
| | 15 | (9, 5) | 0 | 1 | 47 | (9, 5) | 0 | 9 |
| | 16 | (8, 5) | 0 | 1 | 48 | (8, 5) | 0 | 9 |
| | 17 | (3, 5) | 0 | 1 | 49 | (3, 5) | 0 | 9 |
| | 18 | (2, 5) | 0 | 1 | 50 | (2, 5) | 0 | 9 |
| | 19 | (9, 2) | 1 | 2 | 51 | (11, 2) | 1 | 10 |
| | 20 | (8, 2) | 1 | 2 | 52 | (10, 2) | 1 | 10 |
| | 21 | (3, 2) | 1 | 2 | 53 | (5, 2) | 1 | 10 |
| | 22 | (2, 2) | 1 | 2 | 54 | (4, 2) | 1 | 10 |
| | 23 | (9, 5) | 0 | 3 | 55 | | | |
| | 24 | (8, 5) | 0 | 3 | 56 | | | |
| | 25 | (3, 5) | 0 | 3 | 57 | | | |
| | 26 | (2, 5) | 0 | 3 | 58 | | | |
| | 27 | (9, 2) | 1 | 4 | 59 | | | |
| | 28 | (8, 2) | 1 | 4 | 60 | | | |
| | 29 | (3, 2) | 1 | 4 | 61 | | | |
| | 30 | (2, 2) | 1 | 4 | 62 | | | |
| | 31 | (9, 5) | 0 | 5 | 63 | | | |

From Table 6, each Type represents the value corresponding to the CSI-RS pattern shown in FIGs. 45 to 48.

In other words, Type 0 of Table 6 represents the CSI-RS pattern of FIGs. 45a and 45b.

The total number of Type 0s from Table 6 is 15, and the CSI-RS patterns of FIGs. 45a and 45b, namely the resource pools of 4-port CSI-RS amount to 15 in total.

In the same manner, Type 1 corresponds to the CSI-RS pattern of FIG. 46a.

If RE mapping corresponding to each Type, namely CSI-RS pattern of FIGs. 45 to 48 is generalized, it may be expressed as the following mathematical equations.

In other words, the RE mapping rule for Type 0 is defined as shown in Eq. 14.

【Eq. 14】

$$k = k' + 12m + \begin{cases} -0 & \text{for } p \in \{15,16\} \\ -1 & \text{for } p \in \{17,18\} \end{cases}, \quad l = l' + l'', \ l'' = 0,1$$

The RE mapping rule for Type 1 may be defined as shown in Eq. 15.

**【Eq. 15】**

$$k = k' + 12m \quad \text{for } p \in \{15,16,17,18\}, \quad l = l' + l'', \quad l'' = 0,1,4,5$$

The RE mapping rule for Type 2 may be defined as shown in Eq. 16.

**【Eq. 16】**

$$k = k' + 12m \quad \text{for } p \in \{15,16,17,18\}, \quad l = l' + l'', \quad l'' = 0,1,3,4$$

The RE mapping rule for Type 3 may be defined as shown in Eq. 17.

**【Eq. 17】**

$$k = k' + 12m + \begin{cases} +0 & \text{for } p \in \{15,16\} \\ +1 & \text{for } p \in \{17,18\} \end{cases}, \quad l = l' + l'' + \begin{cases} +0 & \text{for } p \in \{15,16\} \\ +3 & \text{for } p \in \{17,18\} \end{cases}, \quad l'' = 0,1$$

The RE mapping rule for Type 4 may be defined as shown in Eq. 18.

**【Eq. 18】**

$$k = k' + 12m + \begin{cases} +0 & \text{for } p \in \{15,16\} \\ +1 & \text{for } p \in \{17,18\} \end{cases}, \quad l = l' + l'' + \begin{cases} +0 & \text{for } p \in \{15,16\} \\ +2 & \text{for } p \in \{17,18\} \end{cases}, \quad l'' = 0,1$$

The RE mapping rule for Type 5 may be defined as shown in Eq. 19.

**【Eq. 19】**

$$k = k' + 12m + \begin{cases} -0 & \text{for } p \in \{15,16\} \\ -1 & \text{for } p \in \{17,18\} \end{cases}, \quad l = l' + l'' + \begin{cases} +0 & \text{for } p \in \{15,16\} \\ +3 & \text{for } p \in \{17,18\} \end{cases}, \quad l'' = 0,1$$

The RE mapping rule for Type 6 may be defined as shown in Eq. 20.

**【Eq. 20】**

$$k = k' + 12m + \begin{cases} -0 & \text{for } p \in \{15,16\} \\ -1 & \text{for } p \in \{17,18\} \end{cases}, \quad l = l' + l'' + \begin{cases} +0 & \text{for } p \in \{15,16\} \\ +2 & \text{for } p \in \{17,18\} \end{cases}, \quad l'' = 0,1$$

The RE mapping rule for Type 7 may be defined as shown in Eq. 21.

**【Eq. 21】**

$$k = k' + 12m + \begin{cases} +0 & \text{for } p \in \{15,16\} \\ +2 & \text{for } p \in \{17,18\} \end{cases}, \quad l = l' + l'' + \begin{cases} +0 & \text{for } p \in \{15,16\} \\ +3 & \text{for } p \in \{17,18\} \end{cases}, \quad l'' = 0,1$$

The RE mapping rule for Type 8 may be defined as shown in Eq. 22.

【Eq. 22】

$$k = k'+12m+\begin{cases}+0 \text{ for } p \in \{15,16\} \\ +2 \text{ for } p \in \{17,18\}\end{cases}, \quad l = l'+l''+\begin{cases}+0 \text{ for } p \in \{15,16\} \\ +2 \text{ for } p \in \{17,18\}\end{cases}, \quad l'' = 0,1$$

The RE mapping rule for Type 9 may be defined as shown in Eq. 23.

【Eq. 23】

$$k = k'+12m+\begin{cases}-0 \text{ for } p \in \{15,16\} \\ -2 \text{ for } p \in \{17,18\}\end{cases}, \quad l = l'+l''+\begin{cases}+0 \text{ for } p \in \{15,16\} \\ +3 \text{ for } p \in \{17,18\}\end{cases}, \quad l'' = 0,1$$

The RE mapping rule for Type 10 may be defined as shown in Eq. 24.

【Eq. 24】

$$k = k'+12m+\begin{cases}-0 \text{ for } p \in \{15,16\} \\ -2 \text{ for } p \in \{17,18\}\end{cases}, \quad l = l'+l''+\begin{cases}+0 \text{ for } p \in \{15,16\} \\ +2 \text{ for } p \in \{17,18\}\end{cases}, \quad l'' = 0,1$$

Table 10 shows CSI-RS RE mapping about the resource pool in 4-port units.

To configure 12-port and 16-port CSI-RS pattern, the resource pools in 4-port units shown in Table 10 may be aggregated.

In other words, the 12-port CSI-RS pattern may be aggregated with three 4-port CSI-RS units, and 16-port CSI-RS pattern may be aggregated with four 4-port CSI-RS units.

At this time, the aggregated port numbering n may be calculated by n = (k-1)*4+p.

At this time, p = 15, 16, 17, 18, k = 1,2,3 when the number of aggregated 4-port CSI-RS units is 3, and k = 1,2,3,4 when the number of aggregated 4-port CSI-RS units is 4.

In other words, k may have the value ranging from 1 to the number of aggregated 4-port CSI-RS units.

In other words, in case the number of aggregated 4-port CSI-RS units is c, k=1,...,c.

Also, to implement full power transmission of CSI-RS, aggregation may be limited for the same type of Table 10 when 12-port or 16-port CSI-RS is configured.

Also, the aggregation may be limited to be performed between specific CSI-RS configurations of the same type.

To describe with an example of type 0, aggregation may be limited to the aggregation among a predetermined number of CSI-RS configurations from among CSI-RS configuration 2 to 7 (the first CSI-RS configuration set for type 0, aggregation among a predetermined number of CSI-RS configurations from among CSI-RS configuration 10 to 14 (the second CSI-RS configuration set for type 0), or aggregation of 4 port CSI-RS units respectively from the first CSI-RS configuration set (CSI-RS configuration 2 to 7) and the second CSI-RS configuration set (CSI-RS configuration 10 to 14).

Also, taking into account the fact that the number of legacy CSI-RS configurations is 32 in total (refer to Table 3) for a normal CP, a new 4-port CSI configuration for CDM of length 4 may also be configured so that the number of CSI-RS configurations is smaller than 32.

As an example of the description above, Table 11 below may be considered.

In other words, Table 11 comprises 11 CSI-RS configurations of type 0 and 16 CSI-RS configurations of type 1 to 4 of Table 10.

For the case of type 0, the CSI-RS configuration 10 of Table 11 has been added to obtain aggregation flexibility for 12-ports.

Also, in case CDM of length 4 is applied only in the time domain (the remaining Types except for Type 0), difference between subcarriers is limited to be within 1 by taking into account the performance of CDM of length 4.

In case Table 11 is used, for example, the 12-port and 16-port CSI-RS pattern of FIGs. 36 and 41 may be easily configured by using a single 4-port resource pool.

As an example of Table 11, configuration requiring less than 32 CSI-RS configurations may easily be realized as a subset of Table 10.

Also, in case only the first embodiment (time domain only CDM 4) is used, the 12-port and 16-port CSI-RS configuration may comprise a subset of CSI-RS configuration of {15, ..., 54} from Table 10; while, in case only the second embodiment (time and frequency domain CDM 4) is used, the 12-port and 16-port CSI-RS configuration may comprise a subset of CSI-RS configuration of {0, ..., 14}.

In this manner, the CSI-RS configuration may be configured in the same manner for each CSI process or independently for each CSI process.

More specifically, when the CSI-RS is aggregated as the same type for each CSI process, the aggregation type may be set differently for each CSI process.

In case the CSI-RS of a different type is aggregated for each CSI process, a different CSI-RS aggregation may be set for each CSI process.

Table 11 below shows an example of mapping CSI-RS configuration for a normal CP being contracted to (k', l').

【Table 11】

| CSI reference signal configuration | Number of CSI reference signals configured 4 | | | CSI reference signal configuration | Number of CSI reference signals configured 4 | | |
|---|---|---|---|---|---|---|---|
| | $(k',l')$ | $n_s \bmod 2$ | Type | | $(k',l')$ | $n_s \bmod 2$ | Type |
| Frame structure type 1 and 2 | | | | | | | |
| 0 | (9, 5) | 0 | 0 | 16 | (8, 2) | 1 | 2 |
| 1 | (3, 5) | 0 | 0 | 17 | (3, 2) | 1 | 2 |
| 2 | (11, 2) | 1 | 0 | 18 | (2, 2) | 1 | 2 |
| 3 | (9, 2) | 1 | 0 | 19 | (9, 5) | 0 | 3 |
| 4 | (7, 2) | 1 | 0 | 20 | (8, 5) | 0 | 3 |
| 5 | (5, 2) | 1 | 0 | 21 | (3, 5) | 0 | 3 |
| 6 | (3, 2) | 1 | 0 | 22 | (2, 5) | 0 | 3 |
| 7 | (1, 2) | 1 | 0 | 23 | (9, 2) | 1 | 4 |
| 8 | (9, 5) | 1 | 0 | 24 | (8, 2) | 1 | 4 |
| 9 | (3, 5) | 1 | 0 | 25 | (3, 2) | 1 | 4 |
| 10 | (6, 2) | 1 | 0 | 26 | (2, 2) | 1 | 4 |
| 11 | (9, 5) | 0 | 1 | 27 | | | |
| 12 | (8, 5) | 0 | 1 | 28 | | | |
| 13 | (3, 5) | 0 | 1 | 29 | | | |
| 14 | (2, 5) | 0 | 1 | 30 | | | |
| 15 | (9, 2) | 1 | 2 | 31 | | | |

The RE mapping rule for each type of Table 11 is given by Eqs. 25 to 29.

The RE mapping rule for Type 0 may be defined as shown in Eq. 25.

【Eq. 25】

$$k = k' + 12m + \begin{cases} -0 & \text{for } p \in \{15,16\} \\ -1 & \text{for } p \in \{17,18\} \end{cases}, \quad l = l' + l'', \ l'' = 0,1$$

The RE mapping rule for Type 1 may be defined as shown in Eq. 26.

【Eq. 26】

$$k = k' + 12m \quad \text{for } p \in \{15,16,17,18\}, \quad l = l' + l'', \ l'' = 0,1,4,5$$

The RE mapping rule for Type 2 may be defined as shown in Eq. 27.

[Eq. 27]

【Eq. 27】

$$k = k' + 12m \quad \text{for } p \in \{15,16,17,18\}, \quad l = l' + l'', \ l'' = 0,1,3,4$$

The RE mapping rule for Type 3 may be defined as shown in Eq. 28.

【Eq. 28】

$$k = k' + 12m + \begin{cases} +0 \ \text{for } p \in \{15,16\} \\ +1 \ \text{for } p \in \{17,18\} \end{cases}, \quad l = l' + l'' + \begin{cases} +0 \ \text{for } p \in \{15,16\} \\ +3 \ \text{for } p \in \{17,18\} \end{cases}, \quad l'' = 0,1$$

The RE mapping rule for Type 4 may be defined as shown in Eq. 29.

【Eq. 29】

$$k = k' + 12m + \begin{cases} +0 \ \text{for } p \in \{15,16\} \\ +1 \ \text{for } p \in \{17,18\} \end{cases}, \quad l = l' + l'' + \begin{cases} +0 \ \text{for } p \in \{15,16\} \\ +2 \ \text{for } p \in \{17,18\} \end{cases}, \quad l'' = 0,1$$

In what follows, the descriptions above and the method according to the present invention will be summarized.

The present invention proposes a new CSI-RS configuration supporting (supporting more than 8 ports) FD-MIMO (or enhanced MIMO or massive MIMO).

The present invention is related to CSI-RS configuration for class A reporting.

First, 12-port and 16-port CSI-RS pattern configuration using CDM of length 2 are described.

As described below, the 16-port CSI-RS configuration may be composed by aggregating eight legacy 2-port CSI-RS resources or two legacy 8-port CSI-RS resources.

In other words, for 16-port CSI-RS resource, (N, K) = (8,2), (2, 8).

At this point, N represents the number of ports of the legacy CSI-RS, and K represents the number of N-port CSI-RS resources.

Also, as described below, the 12-port CSI-RS configuration may be composed by aggregating three legacy 4-port CSI-RS resources or six legacy 2-port CSI-RS resources.

In other words, for 12-port CSI-RS resource, (N, K) = (4,3), (2, 6).

Also, antenna port mapping of 12-port and 16-port CSI-RS which aggregates legacy CSI-RS resources is as follows.

- For 16-port CSI-RS, aggregated port number is p = 15, 16, ..., 30.
- For 12-port CSI-RS, aggregated port number is p = 15, 16, ..., 26.

To express the antenna port mapping in a general setting, the aggregated port number (n) may be expressed by n = (k-1)*N+p, and p = 15, ..., 14+N.

At this point, k (= 1, ..., K) corresponds to the k-th CSI-RS configuration.

To describe in more detail, the 12-port and 16-port CSI-RS configuration for CDM of length 2 may be composed by aggregation of legacy CSI-RS configurations.

In other words, for given K CSI-RS resources, CSI-RS (N ∈ {2, 4, 8}) of 2, 4, 8-ports are used to configure 12-port and 16-port CSI-RS resources.

At this point, although a little smaller N value may provide a little more flexibility for CSI-RS aggregation, a larger N value may enable for the UE and the eNB to realize much simpler implementation.

Therefore, for 16-port, (N, K) = (8,2) is preferred while for 12-port, (N,K) = (4,3) is preferred.

Next, CSI-RS mapping with respect to CDM of length 4 will be described.

Full-port CSI-RS may be mapped to each OFDM symbol used for CSI-RS mapping.

Configuration of a CDM RE set may be as follows.

- Alt 1: time domain only (4 OFDM symbols)
- Alt 2: time and frequency domain (2 subcarriers x 2 OFDM symbols)

The CSI-RS resource configuration based on CDM of length 4 may boost up CSI-RS transmission power in that CDM length is extended.

Therefore, the REs code division multiplexed by applying CDM of length 4 should not be too far apart in the time and/or frequency domain.

In a similar context, to prevent performance from being excessively degraded, a complex-valued symbol for SFBC may be mapped to the resource elements of (k, l) and (k+n, l), where n<3, in the same OFDM symbol.

At this point, n represents an interval between subcarriers.

Also, for CDM-2, within the same CSI-RS resource, the maximum time difference between any pair of ports should not exceed 0.28 ms in order to reduce the effect of phase drift.

This implies that aggregation is not allowed for REs within the OFDM symbol {5, 6} and {12, 13}.

Considering the configuration principle, CDM-4 has to be performed for REs having m < 6 and n < 3.

At this point, m and n respectively represent the time difference and frequency difference between REs located at (k, l) and (k+n, l+m).

In other words, in case CDM-4 is applied for class A CSI reporting, the maximum time and frequency difference between aggregated REs become m<6 and n<3 respectively.

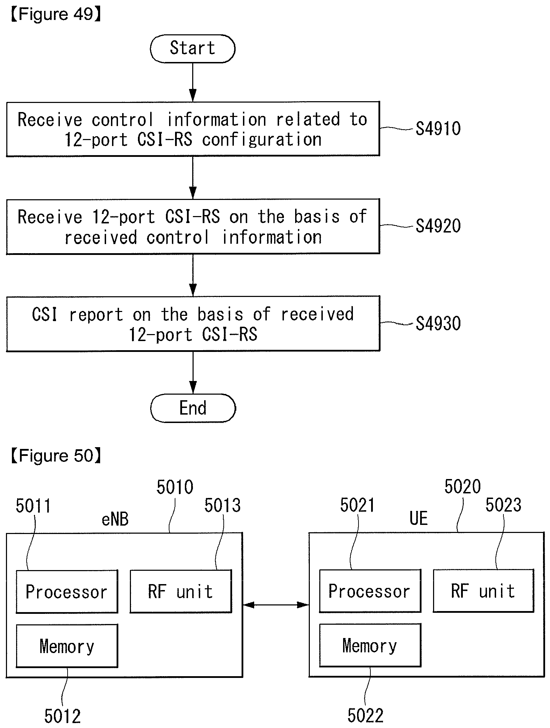

FIG. 49 is a flow diagram illustrating one example of a 12-port CSI-RS configuration method using CDM of length 4 according to the present invention.

First, the UE receives RRC (Radio Resource Control) signaling including control information related to CSI-RS configuration using more than 8 ports S4910.

At this point, CSI-RS using more than 8 ports will be described by referring to an example of CSI-RS (Reference Signal) transmitted through 12 antenna ports.

The RRC signaling may further include CDM length information indicating CDM length.

The CDM length may be CDM length 2, CDM length 4, or CDM length 8.

The CDM length information may be expressed as CDM type information.

Afterwards, the UE receives the 12-port CSI-RS from the eNB on the basis of the received control information through a 12-port CSI-RS resource S4920.

Three 4-port CSI-RS resources are aggregated to set up the 12-port CSI-RS resource.

At this time, resource element mapping for each port of the 12-port CSI-RS applies CDM of length 4 to each of three 4-port CSI-RS port groups.

The CDM of length 4 is defined by Eq. 13.

Also, the four REs correspond to two consecutive symbols in the time domain and two subcarriers in the frequency domain.

Also, the two subcarriers are located being separated from each other by an interval of 6 subcarriers.

Also, individual ports of each 4-port CSI-RS port group are mapped to 4 REs (Resource Elements) by applying CDM (Code Division Multiplexing) of length 4 for each port {(0, 1, 2, 3) or (15, 16, 17, 18)}.

The 4-port CSI-RS resource is included in the 4-port CSI-RS resource pool to which the CDM of length 4 is applied.

At this point, the 4-port CSI-RS resource pool includes a plurality of 4-port CSI-Rs resources, and the plurality of 4-port CSI-RS resources may be distinguished by specific types.

The specific types include the type where the CDM of length 4 is applied to both of symbols and subcarriers and the type where the CDM of length 4 is applied only to symbols.

Also, the specific type is mapped to the CSI-RS configuration information indicating the start position of the 4-port CSI-RS resource. Table 10 shows a specific mapping relationship.

Afterwards, the UE reports Channel State Information (CSI) to the eNB on the basis of the received CSI-RS S4930.

The control information may further include position information indicating the start position of each of the aggregated 4-port CSI-RS resources.

Also, the control information may further include information indicating the number of ports of the aggregated CSI-RS resources.

**Apparatus to which the present invention may be applied**

FIG. 50 illustrates a block diagram of a wireless communication apparatus according to one embodiment of the present invention.

With reference to FIG. 50, a wireless communication system comprises an eNB 5010 and a plurality of UEs 5020 located within the communication range of the eNB 5010.

The eNB 5010 includes a processor 5011, a memory 5012, and an RF (Radio Frequency) unit 5013. The processor 5011 implements functions, processes and/or methods proposed in FIG. 1 to FIG. 49. The layers of a wireless interface protocol may be implemented by the processor 5011. The memory 5012 is connected to the processor 5011 and stores various information for driving the processor 5011. The RF unit 5013 is connected to the processor 5011 and transmits and/or receives radio signals.

The UE 5020 includes a processor 5021, a memory 5022, and an RF (Radio Frequency) unit 5023. The processor 5021 implements functions, processes and/or methods proposed in FIG. 1 to FIG. 49. The layers of a wireless interface protocol may be implemented by the processor 5021. The memory 5022 is connected to the processor 5021 and stores various information for driving the processor 5021. The RF unit 5023 is connected to the processor 5021 and transmits and/or receives radio signals.

The memory 5012, 5022 may be located inside or outside the processor 5011, 5021, and may be coupled to the processor 5011, 5021 by using various well-known means.

Also, the eNB 5010 and/or UE 5020 may have a single or multiple antennas.

The embodiments described above are combinations of constituting elements and characteristics of the present invention in a predetermined manner. Each individual constituting element or characteristic has to be considered to be selective unless otherwise explicitly stated. Each individual constituting element or characteristic may be implemented so that it is not combined with other constituting elements or characteristics. Also, the embodiment of the present invention may be implemented by combining part of the constituting elements and/or characteristics. The order of operations described in the embodiments of the present invention may be changed. Part of the structure or characteristics of one embodiment may be included in a different embodiment or replaced with the corresponding structure or characteristics of the different embodiment. It is apparent that an embodiment may be constructed by combining those claims not explicitly referencing to each other within the technical scope of the present invention or included as a new claim by amendment after patent application.

The embodiments of the present invention may be implemented by various means, for example, hardware, firmware, software, or a combination thereof. In the case of hardware implementation, one embodiment of the present invention may be implemented by one or more of ASICs (Application Specific Integrated Circuits), DSPs (Digital Signal Processors), DSPDs (Digital Signal Processing Devices), PLDs (Programmable Logic Devices), FPGAs (Field Programmable Gate Arrays), processor, controller, micro-controller, and micro-processor.

In the case of software implementation, one embodiment of the present invention may be implemented in the form of a module, procedure, or function which performs the function or operations described above. Software codes may be executed by a processor stored in the memory. The memory may be located inside or outside the processor and may exchange data with the processor by using already-known various means.

It should be clearly understood by those skilled in the art that the present invention may be embodied in a different specific form as long as the embodiment does not lose essential characteristics of the present invention. Therefore, the detailed descriptions above may not be interpreted as limiting the present invention in any aspects but should be regarded as being illustrative. The technical scope of the present invention should be determined according to rational interpretation of appended claims, and all changes within the equivalent scope of the present invention should be included in the technical scope of the present invention.

[Industrial Applicability]

A method for reporting channel state information in a wireless communication system according to the present invention has been described with an example applied to the 3GPP LTE/LTE-A system, but the present invention may also be applied to various wireless communication systems in addition to the 3GPP LTE/LTE-A system.

**Claims**

1. A method for reporting Channel State Information (CSI) in a wireless communication system, the method performed by a user equipment (UE) comprising:

   receiving RRC (Radio Resource Control) signaling including control information related to configuration of a 12-port CSI-RS (Reference Signal) from an eNB;
   receiving the 12-port CSI-RS through a 12-port CSI-RS resource from the eNB based on the received control information; and
   reporting CSI (Channel State Information) to the eNB based on the received CSI-RS,
   wherein the 12-port CSI-RS resource is an aggregation of three 4-port CSI-RS resources,
   wherein the 4-port CSI-RS resource comprises 4 REs (Resource Elements), and
   wherein the ports of the 4-port CSI-RS are multiplexed by CDM (Code Division Multiplexing) of length 4 and are mapped to the 4 REs.

2. The method of claim 1, wherein the CDM of length 4 is defined by the following mathematical equation:

【Eq.】

$$\mathbf{W}_0 = [1,1,1,1], \mathbf{W}_1 = [1,-1,1,-1], \mathbf{W}_2 = [1,1,-1,-1], \mathbf{W}_3 = [1,-1,-1,1].$$

3. The method of claim 1, wherein the 4 REs include two consecutive symbols in the time domain and two subcarriers in the frequency domain.

4. The method of claim 3, wherein the two subcarriers are separated from each other by 6 subcarrier intervals.

5. The method of claim 1, wherein the ports of the 12 port CSI-RS comprise three 4-port CSI-RS port groups, and the CDM of length 4 is applied to each 4-port CSI-RS port group.

6. The method of claim 1, wherein the RRC signaling further comprises CDM length information indicating CDM length.

7. The method of claim 1, wherein the CDM length is CDM 2, CDM 4, or CDM 8.

8. The method of claim 1, wherein the control information further comprises position information indicating a start position of each 4-port CSI-RS resource being aggregated.

9. The method of claim 8, wherein the control information further comprises information indicating the number of ports of each CSI-RS resource being aggregated.

10. The method of claim 1, wherein the 4-port CSI-RS resource is included in a 4-port CSI-RS resource pool to which the CDM of length 4 is applied.

11. The method of claim 10, wherein the 4-port CSI-RS resource pool includes a plurality of 4-port CSI-RS resources, and the plurality of 4-port CSI-RS resources are distinguished by specific types.

12. The method of claim 11, wherein the specific types include the type where the CDM of length 4 is applied to both of symbols and subcarriers and the type where the CDM of length 4 is applied only to symbols.

13. The method of claim 11, wherein the specific type is mapped to the CSI-RS configuration information indicating the start position of the 4-port CSI-RS resource.

14. A user equipment for reporting CSI (Channel State Information) in a wireless communication system, comprising:

an RF (Radio Frequency) unit transmitting and receiving a radio signal; and
a processor controlling the RF unit,
wherein the processor is configured
to receive RRC (Radio Resource Control) signaling including control information related to configuration of a 12-port CSI-RS (Reference Signal) from an eNB;
to receive the 12-port CSI-RS through a 12-port CSI-RS resource from the eNB based on the received control information; and
to report CSI (Channel State Information) to the eNB based on the received CSI-RS,
wherein the 12-port CSI-RS resource is an aggregation of three 4-port CSI-RS resources,
wherein the 4-port CSI-RS resource comprises 4 REs (Resource Elements), and
wherein the ports of the 4-port CSI-RS are multiplexed by CDM (Code Division Multiplexing) of length 4 and are mapped to the 4 REs.

15. The UE of claim 14, wherein the CDM of length 4 is defined by the following mathematical equation:

【Eq.】

$$\mathbf{W}_0 = [1,1,1,1], \mathbf{W}_1 = [1,-1,1,-1], \mathbf{W}_2 = [1,1,-1,-1], \mathbf{W}_3 = [1,-1,-1,1].$$

**16.** The UE of claim 14, wherein the 4 REs include two consecutive symbols in the time domain and two subcarriers in the frequency domain

**17.** The UE of claim 16, wherein the two subcarriers are separated from each other by 6 subcarrier intervals.

**18.** The method of claim 14, wherein the ports of the 12 port CSI-RS comprise three 4-port CSI-RS port groups, and the CDM of length 4 is applied to each 4-port CSI-RS port group.

【Figure 1】

【Figure 2】

One downlink slot

7 OFDM symbols

$N^{DL} \times 1212$ subcarriers

12 carriers

Resource block
12X7 Resource elements

Resource element

【Figure 3】

Control area            Data area

First slot            Second slot

One subframe

Frequency

Time

【Figure 4】

Control area

Data area

RB pair

One slot    One slot

Subframe

Frequency

Time

【Figure 5】

【Figure 6】

【Figure 7】

(a)

(b)

【Figure 8】

(a) One or two CSI-RS ports

(b) Four CSI-RS ports

□:CSI-RS configuration used
for one or two CSI-RS ports

□:CSI-RS configuration used
for four CSI-RS ports

(c) Eight CSI-RS ports

□:CSI-RS configuration used
for eight CSI-RS ports

【Figure 9】

【Figure 10】

【Figure 11】

(M−1, 0)    (M−1, 1)    · · · · ·    (M−1, N−1)

·              ·          · · · · ·        ·
·              ·                            ·
·              ·                            ·

(1, 0)       (1, 1)       · · · · ·    (1, N−1)

(0, 0)       (0, 1)       · · · · ·    (0, N−1)

【Figure 12】

(a)

(b)

【Figure 13】

【Figure 14】

(a) 2 CSI_RS ports

(b) 4 CSI_RS ports

(c) 8 CSI_RS ports

CRS port#1, 2

CRS port#3, 4

DMRS(Rel-8) port#5, if configured

DMRS(Rel-9/10)

PDCCH

PDSCH

【Figure 15】

1 or 2 ports

(a)

4 ports

(b)

8 ports

(c)

【Figure 16】

【Figure 17】

【Figure 18】

【Figure 19】

【Figure 20】

【Figure 21】

←PDCCH→

RE occupied by PDCCH

RE occupied by CRS
(port 0, 1)

RE occupied by CRS
(port 2, 3)

RE occupied by DMRS
(port 7, 8)

New 16-port
CSI-RS pattern#1

New 16-port
CSI-RS pattern#2

【Figure 22】

【Figure 23】

RE occupied by PDCCH

RE occupied by CRS

RE occupied by DMRS
(port 2, 3, 5, 7)

RE occupied by DMRS
(port 0, 1, 4, 6)

RE used for legacy
CSI-RS patterns

New 16-port
CSI-RS pattern#1

【Figure 24】

| RE occupied by PDCCH | | RE occupied by CRS |
| RE occupied by DMRS (port 2, 3, 5, 7) | | RE occupied by DMRS (port 0, 1, 4, 6) |
| RE used for legacy CSI-RS patterns | | New 16-port CSI-RS pattern#1 |

【Figure 25】

【Figure 26】

【Figure 26】

RE occupied by PDCCH

RE occupied by CRS

RE occupied by DMRS (port 2, 3, 5, 7)

RE occupied by DMRS (port 0, 1, 4, 6)

RE used for legacy CSI-RS patterns

New 16-port CSI-RS pattern#1

New 16-port CSI-RS pattern#2

【Figure 27】

RE occupied by PDCCH

RE occupied by CRS

RE occupied by DMRS
(port 2, 3, 5, 7)

RE occupied by DMRS
(port 0, 1, 4, 6)

RE used for legacy
CSI-RS patterns

New 12-port
CSI-RS pattern#1

New 12-port
CSI-RS pattern#2

【Figure 28】

RE occupied by PDCCH

RE occupied by CRS

RE occupied by DMRS
(port 2, 3, 5, 7)

RE occupied by DMRS
(port 0, 1, 4, 6)

RE used for legacy
CSI-RS patterns

New 12-port
CSI-RS pattern#1

New 12-port
CSI-RS pattern#2

【Figure 29】

【Figure 30】

【Figure 31】

【Figure 32】

RE occupied by PDCCH

RE occupied by CRS (port 0, 1)

RE occupied by CRS (port 2, 3)

RE occupied by DMRS (port 7, 8)

RE used for legacy CSI-RS patterns

New 12-port CSI-RS pattern#1

New 12-port CSI-RS pattern#2

【Figure 33】

【Figure 34】

【Figure 35】

RE occupied by PDCCH

RE occupied by CRS

RE occupied by DMRS (port 2, 3, 5, 7)

RE occupied by DMRS (port 0, 1, 4, 6)

RE used for legacy CSI-RS patterns

New 16-port CSI-RS pattern#1

New 16-port CSI-RS pattern#2

【Figure 36】

RE occupied by PDCCH

RE occupied by CRS

RE occupied by DMRS (port 2, 3, 5, 7)

RE occupied by DMRS (port 0, 1, 4, 6)

RE used for legacy CSI-RS patterns

New 16-port CSI-RS pattern#1

New 16-port CSI-RS pattern#2

【Figure 37】

【Figure 38】

RE occupied by PDCCH

RE occupied by CRS

RE occupied by DMRS (port 2, 3, 5, 7)

RE occupied by DMRS (port 0, 1, 4, 6)

RE used for legacy CSI-RS patterns

New 12-port CSI-RS pattern#1

New 12-port CSI-RS pattern#2

New 12-port CSI-RS pattern#3

【Figure 39】

RE occupied by PDCCH

RE occupied by CRS

RE occupied by DMRS (port 2, 3, 5, 7)

RE occupied by DMRS (port 0, 1, 4, 6)

RE used for legacy CSI-RS patterns

New 12-port CSI-RS pattern#1

New 12-port CSI-RS pattern#2

New 12-port CSI-RS pattern#3

【Figure 40】

【Figure 41】

【Figure 42】

RE occupied by PDCCH

RE occupied by CRS

RE occupied by DMRS
(port 2, 3, 5, 7)

RE occupied by DMRS
(port 0, 1, 4, 6)

RE used for legacy
CSI-RS patterns

New 12-port
CSI-RS pattern#1

New 12-port
CSI-RS pattern#2

【Figure 43】

(a)

(b)

RE occupied by PDCCH

RE occupied by DMRS (port 0, 1, 4, 6)

New 16-port CSI-RS pattern#1

RE occupied by CRS

RE used for legacy CSI-RS patterns

New 16-port CSI-RS pattern#2

RE occupied by DMRS (port 2, 3, 5, 7)

【Figure 44】

(a)

(b)

RE occupied by PDCCH

RE occupied by CRS

RE occupied by DMRS(port 2,3,5,7)

RE occupied by DMRS(port 0,1,4,6)

RE used for legacy CSI-RS patterns (Y)

RE used for legacy CSI-RS patterns (Z)

New 12-port CSI-RS pattern#1

New 12-port CSI-RS pattern#2

【Figure 45】

(a)

(b)

RE occupied by PDCCH

RE occupied by DMRS
(port 2, 3, 5, 7)

RE occupied by CRS

RE occupied by DMRS
(port 0, 1, 4, 6)

【Figure 46】

【Figure 47】

(a)

(b)

【Figure 48】

(a)

←PDCCH→

(b)

←PDCCH→

【Figure 49】

```
                    ( Start )
                        |
                        v
  +-------------------------------------------+
  | Receive control information related to    |——S4910
  |      12-port CSI-RS configuration         |
  +-------------------------------------------+
                        |
                        v
  +-------------------------------------------+
  | Receive 12-port CSI-RS on the basis of    |——S4920
  |         received control information       |
  +-------------------------------------------+
                        |
                        v
  +-------------------------------------------+
  |  CSI report on the basis of received       |——S4930
  |            12-port CSI-RS                   |
  +-------------------------------------------+
                        |
                        v
                    ( End )
```

【Figure 50】

```
         5011        5010    5013              5021        5020   5023
                 eNB                                   UE
  +----------------------------------+    +----------------------------------+
  |  +-----------+  +-----------+     |    |  +-----------+  +-----------+     |
  |  | Processor |  |  RF unit  |     |<-->|  | Processor |  |  RF unit  |     |
  |  +-----------+  +-----------+     |    |  +-----------+  +-----------+     |
  |  +-----------+                   |    |  +-----------+                   |
  |  |  Memory   |                   |    |  |  Memory   |                   |
  |  +-----------+                   |    |  +-----------+                   |
  +----------------------------------+    +----------------------------------+
         5012                                     5022
```

## INTERNATIONAL SEARCH REPORT

| International application No. |
|---|
| **PCT/KR2016/009872** |

**A.    CLASSIFICATION OF SUBJECT MATTER**

*H04L 5/00(2006.01)i, H04L 1/06(2006.01)i, H04L 1/00(2006.01)i, H04W 24/10(2009.01)i*

According to International Patent Classification (IPC) or to both national classification and IPC

**B.    FIELDS SEARCHED**

Minimum documentation searched (classification system followed by classification symbols)
H04L 5/00; H04J 11/00; H04W 72/04; H04W 24/08; H04L 1/06; H04L 1/00; H04W 24/10

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: CSI-RS, RRC, 12 port, CDM, Resource Element, RE, coupling

**C.    DOCUMENTS CONSIDERED TO BE RELEVANT**

| Category* | Citation of document, with indication, where appropriate, of the relevant passages | Relevant to claim No. |
|---|---|---|
| A | US 2015-0016292 A1 (LG ELECTRONICS INC.) 15 January 2015<br>See paragraphs [0001], [0010], [0016], [0113]; and figure 12. | 1-18 |
| A | HUAWEI et al., "CSI-RS Design for 12 and 16 Ports", R1-153792, 3GPP TSG RAN WG1<br>Meeting #82, Beijing, China, 15 August 2015<br>See sections 1-2; and figure 3. | 1-18 |
| A | US 2015-0163008 A1 (ELECTRONICS AND TELECOMUNICATIONS RESEARCH<br>INSTITUTE) 11 June 2015<br>See paragraphs [0126]-[0131]; and figure 9. | 1-18 |
| A | SAMSUNG, "Discussion on NZP CSI-RS Resource Configuration for 12 and 16 Ports",<br>R1-154159, 3GPP TSG RAN WG1 Meeting #82, Beijing, China, 13 August 2015<br>See sections 2-3. | 1-18 |
| A | US 2013-0208678 A1 (ZHANG, Wenfeng) 15 August 2013<br>See paragraphs [0018]-[0026], [0031]-[0033]; and figure 2. | 1-18 |

| ☐    Further documents are listed in the continuation of Box C. | ☒    See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 DECEMBER 2016 (16.12.2016) | **16 DECEMBER 2016 (16.12.2016)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No.  82-42-472-7140 | Telephone No. |

Form PCT/ISA/210 (second sheet) (January 2015)

INTERNATIONAL SEARCH REPORT

Information on patent family members

International application No.

**PCT/KR2016/009872**

| Patent document cited in search report | Publication date | Patent family member | Publication date |
|---|---|---|---|
| US 2015-0016292 A1 | 15/01/2015 | US 9439090 B2 | 06/09/2016 |
| | | WO 2013-129863 A1 | 06/09/2013 |
| US 2015-0163008 A1 | 11/06/2015 | KR 10-2015-0066996 A | 17/06/2015 |
| US 2013-0208678 A1 | 15/08/2013 | CN 102549997 A | 04/07/2012 |
| | | CN 102549997 B | 20/05/2015 |
| | | EP 2606618 A2 | 26/06/2013 |
| | | EP 2606618 A4 | 20/08/2014 |
| | | EP 2911333 A1 | 26/08/2015 |
| | | HK 1171133 A1 | 18/12/2015 |
| | | HK 1214434 A1 | 22/07/2016 |
| | | JP 2013-534394 A | 02/09/2013 |
| | | JP 2015-233345 A | 24/12/2015 |
| | | JP 5876880 B2 | 02/03/2016 |
| | | KR 10-2013-0045137 A | 03/05/2013 |
| | | MX 2011012204 A | 03/08/2012 |
| | | US 9215697 B2 | 15/12/2015 |
| | | WO 2012-024321 A2 | 23/02/2012 |
| | | WO 2012-024321 A3 | 19/04/2012 |

Form PCT/ISA/210 (patent family annex) (January 2015)